# EUROPEAN PATENT SPECIFICATION

(11) **EP 4 342 305 B1**
(45) Date of publication and mention of the grant of the patent: **03.06.2026**
(21) Application number: 24153441.1
(22) Date of filing: 30.04.2019
(51) Int. Cl.: A23L 27/30, A23L 29/00, A23L 2/60

(54) **METHODS FOR IMPROVING THE SOLUBILITY OF STEVIOL GLYCOSIDE MIXTURES, AND USES**
VERFAHREN ZUR VERBESSERUNG DER LÖSLICHKEIT VON STEVIOLGLYCOSIDGEMISCHEN UND VERWENDUNGEN
PROCÉDÉS D'AMÉLIORATION DE LA SOLUBILITÉ DE MÉLANGES DE GLYCOSIDES DE STÉVIOL ET UTILISATIONS

(30) Priority: 30.04.2018 US 201862664643 P
(43) Date of publication of application: 27.03.2024
(62) Divisional of application: 19796483.6
(73) Proprietor: The Coca-Cola Company, Atlanta, GA 30313 (US)
(72) Inventor: CHEN, Youlung, Marietta (US); MA, Gil, Atlanta (US); PRAKASH, Indra, Alpharetta (US); HEO, Youngsuk, Cumming (US)
(74) Representative: Dehns

(56) References cited:
- WO-A1-2012/108894
- WO-A1-2012/109585
- WO-A1-2016/028899
- WO-A1-2017/031301
- WO-A1-2017/059414
- US-A1- 2015 017 284

## Description

### FIELD OF THE INVENTION

The present invention relates generally to methods of improving the aqueous solubility of steviol glycoside blends containing relatively large amounts of reb M and/or reb D. The method comprises substituting some portion of the blend with a composition comprising reb A and a reb A/reb B blend. Compositions, concentrates, beverages syrups and beverages comprising said blends with improved aqueous solubility are also provided herein.

### BACKGROUND OF THE INVENTION

Stevia is the common name for Stevia *rebaudiana* (Bertoni), a perennial shrub of the Asteracae (Compositae) family native to Brazil and Paraguay. Stevia leaves, the aqueous extract of the leaves, and purified steviol glycosides isolated from Stevia have been developed as sweeteners desirable as both non-caloric and natural in origin. Steviol glycosides isolated from Stevia *rebaudiana* include stevioside, rebaudioside A, rebaudioside C, dulcoside A, rubusoside, steviolbioside, rebaudioside B, rebaudioside D and rebaudioside F.

Reb M (also called rebaudioside X), (13-[(2-*O*-β-D-glucopyranosyl-3-*O*-β-D-glucopyranosyl-β-D-glucopyranosyl)oxy] *ent* kaur-16-en-19-oic acid-[(2-*O*-β-D-glucopyranosyl-3-*O*-β-D-glucopyranosyl-β-D-glucopyranosyl) ester], was isolated from Stevia *rebaudiana* and characterized:

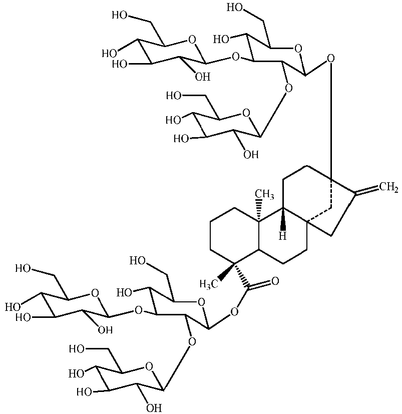

Many steviol glycosides are present in minute quantities in Stevia *rebaudiana,* including Reb M which represents only about 0.05%-0.5% by weight of the leaf. Recently, it was found that Reb M could be used as a sweetener for beverages.

Certain steviol glycosides and blends of steviol glycosides that are desirable for use as sweeteners have poor aqueous solubility. For example, a crystalline composition reb M containing about 75-90% reb M and about 25-10% rebaudioside D by weight cannot be dissolved above concentrations of 0.1-0.15 wt% at room temperature. Pure reb M has an aqueous solubility of 0.1 wt%. Pure reb D has an aqueous solubility of 0.05 wt%. Crystalline A95 has an aqueous solubility of about 0.05 wt%.

The low aqueous solubility these steviol glycosides and blends possess does not necessarily impose issues for their use in finished beverages (less than about 600 ppm). However, their intrinsic solubility poses formulation challenges for concentrated syrups that are ultimately diluted to ready-to-drink beverages, e.g. beverages prepared from syrups with 1:3-1:8 throw ratios. Typically, these syrup concentrates are from 0.25 wt% to about 0.4 wt%, far above the aqueous solubility of the steviol glycosides and blends.

The low intrinsic aqueous solubility of the steviol glycosides or blends may result in undesirable crystal flake precipitation during processing, which may alter taste profile and block dispenser nozzles.

Increasing the temperature of the steviol glycoside solution can increase the solubility, as can the addition of co-solvents such as ethanol. However, these approaches are not compatible with the syrup manufacture process.

A reb M dosing skid has been developed to address the solubility issues when formulating syrups into full strength beverages at the bottler stage, but such equipment is expensive and must be installed at every bottler.

WO 2017/031301 A1 discloses a process for producing a stable, clear liquid steviol glycoside ingredient solution comprising combining a steviol glycoside with a polyol solvent.

US 2015/017284 A1 discloses a disordered crystalline composition comprising rebaudioside M and rebaudioside D, as well as beverages comprising the disordered crystalline compositions and a method of preparing the disordered crystalline compositions.

As such, there remains a need for methods to provide concentrated solutions of steviol glycoside sweeteners typical of beverage syrups.

### SUMMARY OF THE INVENTION

The present invention generally relates to methods of improving the aqueous solubility of a steviol glycoside blend comprising substituting from about 10 wt% to about 40 wt% of said steviol glycoside blend with a composition comprising reb A and a reb A/reb B blend, wherein the relative contributions of reb A and reb A/reb B in the composition can vary from about 10 wt% to about 90wt% reb A and from about 90 wt% to about 10 wt% reb A/reb B blend.

Steviol glycoside blends for use in the present methods are selected from (i) a steviol glycoside mixture comprising reb M and (ii) a steviol glycoside mixture comprising reb D. The steviol glycoside blend can be amorphous, crystalline or a combination of amorphous and crystalline.

The methods described herein provide improved blends that have greater aqueous solubility compared to the aqueous solubility of the steviol glycoside blend when both measured at the same wt%, such as, for example, at least about 2.5x (times) greater.

In yet another aspect, the present invention provides blends with improved aqueous solubility and compositions containing the same.

The present invention also relates to blends comprising from about 60 wt% to about 90 wt% of a steviol glycoside blend and from about 10 wt% to about 40 wt% of a composition comprising reb A and a reb A/reb B blend, wherein the relative contributions of reb A and reb A/reb B in the composition can vary from about 10 wt% to about 90wt% rebA and from about 90 wt% to about 10 wt% reb A/reb B blend, wherein the blend has an aqueous solubility of at least about 0.25 wt%.

The blends can be used to prepare concentrates, beverage syrups and, ultimately, beverages. The beverages can contain one or more additional sweeteners, functional ingredients, additives and combinations thereof.

### DETAILED DESCRIPTION OF THE INVENTION

### I. Definitions

"Syrup" or "Beverage syrup", as used herein, refers to a beverage precursor to which a fluid, typically water, is added to form a ready-to-drink beverage, or a "beverage." Typically, the volumetric ratio of syrup to water is between 1:3 to 1:8, more typically between 1:4 and 1:5. The volumetric ratio of syrup to water also is expressed as a "throw." A 1:5 ratio, which is a ratio commonly used within the beverage industry, is known as a "1+5 throw."

"Beverage", as used herein, refers to liquids suitable for human consumption.

"Aqueous solubility" is the concentration of the chemical in the aqueous phase, when the solution is in. equilibrium with the pure compound in its usual phase (gas, liquid or solid) at a specified temperature. It is commonly expressed as a concentration, either by mass, molarity, molality, mole fraction, or other similar descriptions of concentration.

### II. Methods

The present invention provides a method for improving the aqueous solubility of certain steviol glycoside blends comprising high amounts of reb M and/or reb D that have desirable taste profiles but relatively poor aqueous solubility.

In one embodiment, a method of improving the aqueous solubility of a steviol glycoside blend comprises substituting from about 10 wt% to about 40 wt% of said steviol glycoside blend with a composition comprising reb A and a reb A/reb B blend, wherein the relative contributions of reb A and reb A/reb B in the composition can vary from about 10 wt% to about 90wt% reb A and from about 90 wt% to about 10 wt% reb A/reb B blend. This method provides a blend with improved aqueous solubility, i.e. a "blend of the present invention".

Steviol glycoside blends for use in the methods and compositions described herein (hereinafter "steviol glycoside blends") are selected from (i) a steviol glycoside mixture comprising reb M and (ii) a steviol glycoside mixture comprising reb D.

The steviol glycoside mixture comprising reb M contains at least about 80% reb M by weight, such as, for example, at least about 85% by weight, at least about 90% by weight, at least about 95% by weight, at least about 97% by weight or any range in between.

The steviol glycoside mixture comprising reb M can be RebM80. "RebM80" refers to a steviol glycoside mixture containing at least 80% reb M by weight (the majority of the remainder is Reb D and Reb A). The total steviol glycoside content of the mixture is at least 95%.

The steviol glycoside mixture comprising reb M can also be 95% reb M, i.e. a steviol glycoside mixture comprising reb M in about 95% by weight.

The steviol glycoside mixtures comprising reb M can be amorphous, crystalline or a mixture of amorphous and crystalline forms. The aqueous solubility of amorphous reb M is ~ 0.1 wt%. The aqueous solubility of crystalline RebM80 is ~0.15 wt%.

The "steviol glycoside mixture comprising reb D" contains at least 60% reb D by weight such as, for example, at least about 70% by weight, at least about 80% by weight, at least about 90% by weight, at least about 95% by weight, at least about 97% by weight or any range in between. The steviol glycoside mixture comprising reb D also preferably contains at least 20% reb M by weight. The total steviol glycoside content of the mixture is at least 95%. An exemplary steviol glycoside mixture comprising reb D, "A95", is provided in the examples.

The steviol glycoside mixture comprising reb D can be amorphous, crystalline or a mixture of amorphous and crystalline forms. The aqueous solubility of crystalline reb D is ~0.05 wt%. The aqueous solubility of crystalline A95 is ~0.05%. The aqueous solubility of amorphous A95 is >0.3 wt%.

From about 10 wt% to about 40 wt% of the steviol glycoside blend can be substituted with the composition comprising reb A and a reb A/reb B blend, above, such as, for example, from about 10 wt% to about 30 wt%, from about 10 wt% to about 20 wt%, from about 20 wt% to about 40 wt%, from about 20 wt% to about 30 wt%, or from about 30 wt% to about 40 wt%.

The blends resulting from the methods described herein (hereinafter "blends of the present invention") have greater aqueous solubility compared to the aqueous solubility of the steviol glycoside mixture comprising reb M or reb D (i.e. the steviol glycoside blends without substitution) when measured at the same wt%, such as, for example, at least about 2.5x (times) greater, at least about 3.0x greater, at least about 3.5x greater, at least about 4.0x greater, at least about 4.5x greater, at least about 5.0x greater, at least about 5.5x greater, at least about 6.0x greater, at least about 6.5x greater, at least about 7.0x greater, at least about 7.5x greater, at least about 8.0x greater, at least about 8.5x greater, at least about 9.0x greater, at least about 9.5x greater, at least about 10.x greater or any range between.

The blends of the present invention have an aqueous solubility of at least about 0.25 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt%, at least about 1.0 wt%, at least about 1.5 wt%, at least about 2.0 wt%, at least about 2.5 wt%, at least about 3.0 wt% or any range between.

A number of methods are known in the art for determining aqueous solubility. In one such method, solubility can be determined by a solvent addition method in which a weighed sample is treated with aliquots of aqueous solvent. The mixture is generally vortexed and/or sonicated between additions to facilitate dissolution. Complete dissolution of the test material is determined by visual inspection. Solubility is calculated based on the total solvent used to provide complete dissolution.

Another method for determining solubility is by measuring the turbidity (NTU units) of a composition using a turbidimeter, such as HACH 2100 AN. In a typical experiment, a portion of the composition to be measured is added to a portion of of aqueous solvent (or visa versa) at room temperature. Turbidity is measured after waiting from 2-10 minutes to observe visual dissolution of the portion. Then, another portion of the composition is added, dissolution is observed and turbidity is measured again. This process is repeated until turbidity reaches exceeds beyond acceptable values, typically around 4 NTU-10 NTU. While turbidity measurements can be very useful in determining solubility, it will not detect solids collected on the bottom of a container. Accordingly, it is important to shake the container prior to determining turbidity and confirm a given turbidity measurement with visual inspection of dissolution.

In either method, the amount of composition added divided by the weight of water.times. 100 provides the solubility in (% w/w). For example, if 0.18 g of sample can be dissolved in 30 mL of water, the solubility in water is 0.6%.

Solubility over time for a particular concentration of a composition can be measured using a similar procedure. In a typical experiment at 0.3% (w/w) concentration, 0.09 g of the composition to be measured is added to 30 mL of water at room temperature. The mixture is stirred for 5-45 minutes, at which point all of the sample should be dissolved, and then allowed to stand without disturbing. Turbidity is then measured at the desired time points to determine whether, and when, any material comes out of solution.

Unless specified otherwise, the purity of the reb, GSG or mogroside is at least about 95% by weight.

In one embodiment, from about 10 wt% to about 30 wt% of the steviol glycoside blend can be substituted with reb A and reb A/reb B, such as, for example, from about 10 wt% to about 20 wt%.

In one embodiment, a method for improving the aqueous solubility of a steviol glycoside blend comprises substituting from about 10 wt% to about 40 wt% of said steviol glycoside blend with a composition comprising reb A to provide a blend of the present invention with improved aqueous solubility. The composition comprising reb A may contain at least about 50 wt% reb A, such as, for example, at least about 75 wt% reb A, at least about 80 wt% reb A, or at least about 85 wt% reb A.

The composition comprising reb A further comprises a reb A/reb B blend (e.g. Alpha from Pure Circle). In one embodiment, the composition comprising reb A consists essentially of reb A and a reb A/reb B blend. In another embodiment, the composition comprising reb A consists of reb A and a reb A/reb B blend. The relative contributions of reb A and reb A/reb B in the composition vary from about 10 wt% to about 90 wt% reb A and from about 90 wt% to about 10 wt % reb A/reb B blend. In a particular embodiment, the composition comprising reb A comprises about 50 wt% reb A and about 50 wt% reb A/reb B blend. In a particular embodiment, from about 30 wt% to about 40 wt% of the steviol glycoside blend is substituted with a composition comprising reb A that consists essentially of a reb A/reb B blend.

The composition comprising reb A and a reb A/reb B blend can further comprise at least one mogroside selected from the group consisting of mogroside V, mogroside IV, siamenoside I and the 1,6-α-isomer of siamenoside I (mogro-3-O-[(β-D-glucopyranoside]-24-O-{[(β-D-glucopyranosyl-(1→2)]-[α-D-glucopyranosyl-(1→6)]-β-D-glucopyranoside}) and combinations thereof. The composition comprising reb A and a reb A/reb B blend can further comprise glucosylated steviol glycosides.

### III. Compositions

The present invention also provides "blends of the present invention", resulting from the methods described above, with improved solubility, as well as compositions containing the same. "Compositions" can also refer to, e.g. blends of the present invention in combination with additional ingredients (in solid or liquid form), concentrates, beverage syrups and ready-to-drink beverages.

### A. Blends

In one embodiment, a blend of the present invention comprises (i) from about 60 wt% to about 90 wt% of a steviol glycoside blend (as defined above) and (ii) from about 10 wt% to about 40 wt% of a composition comprising reb A and a reb A/reb B blend, wherein the relative contributions of reb A and reb A/reb B in the composition can vary from about 10 wt% to about 90wt% rebA and from about 90 wt% to about 10 wt% reb A/reb B blend, wherein the blend of the present invention has an aqueous solubility of at least about 0.25 wt%.

The steviol glycoside blend (i) comprises from about 60 % to about 90% by weight of the blend, such as, for example, from about 60 wt% to about 80 wt%, from about 60 wt% to about 70 wt%, from about 70 wt% to about 90 wt%, from about 70 wt% to about 80 wt% or from about 80 wt% to about 90 wt%.

The steviol glycoside blend can be amorphous form, crystalline form or a combination of amorphous and crystalline forms.

Meanwhile, (ii) the composition comprising reb A and a reb A/reb B blend comprises from about 10 wt% to about 40 wt% of the blend, such as, for example, from about 10 wt% to about 30 wt%, from about 10 wt% to about 20 wt%, from about 20 wt% to about 30 wt%, and from about 30 wt% to about 40 wt%.

The blends of the present invention have greater aqueous solubility compared to the aqueous solubility of the steviol glycoside mixture comprising reb M or reb D (i.e. the steviol glycoside blends without substitution) when measured at the same wt%, such as, for example, at least about 2.5x (times) greater, at least about 3.0x greater, at least about 3.5x greater, at least about 4.0x greater, at least about 4.5x greater, at least about 5.0x greater, at least about 5.5x greater, at least about 6.0x greater, at least about 6.5x greater, at least about 7.0x greater, at least about 7.5x greater, at least about 8.0x greater, at least about 8.5x greater, at least about 9.0x greater, at least about 9.5x greater, at least about 10.x greater or any range between.

The blends of the present invention have an aqueous solubility of at least about 0.25 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt%, at least about 1.0 wt%, at least about 1.5 wt%, at least about 2.0 wt%, at least about 2.5 wt%, at least about 3.0 wt% or any range between.

In one embodiment, a blend of the present invention comprises (i) from about 60 wt% to about 90 wt% of a steviol glycoside blend and (ii) from about 10 wt% to about 40 wt% of a composition comprising reb A, as described above. The composition comprising reb A may contain at least about 50 wt% reb A, such as, for example, at least about 75 wt% reb A, at least about 80 wt% reb A, or at least about 85 wt% reb A. The composition comprising reb A further comprises a reb A/reb B blend (e.g. Alpha from Pure Circle). In one embodiment, the composition comprising reb A consists essentially of reb A and a reb A/reb B blend. In another embodiment, the composition comprising reb A consists of reb A and a reb A/reb B blend. The relative contributions of reb A and reb A/reb B in the composition vary from about 10 wt% to about 90 wt% reb A and from about 90 wt% to about 10 wt % reb A/reb B blend. In a particular embodiment, the composition comprising reb A comprises about 50 wt% reb A and about 50 wt% reb A/reb B blend. In a particular embodiment, a blend of the present invention comprises (i) from about 60 wt% to about 75 wt% of a steviol glycoside blend and (ii) from about 30 wt% to about 40 wt% of a composition comprising reb A that consists essentially of a reb A/reb B blend.

The composition comprising reb A and a reb A/reb B blend can further comprise at least one mogroside selected from mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof. In one embodiment, the composition comprising reb A and a reb A/reb B blend can further comprise glucosylated steviol glycosides..

### B. Compositions

The present invention also provides compositions comprising blends of the present invention. Compositions comprise a blend of the present invention and at least one additional ingredient, e.g. at least one additional sweetener and/or at least one functional ingredient and/or at least one additive.

The additional sweetener can be a natural sweetener, a natural high potency sweetener or synthetic sweetener.

As used herein, the phrase "natural high potency sweetener" refers to any sweetener found naturally in nature and characteristically has a sweetness potency greater than sucrose, fructose, or glucose, yet has less calories. The natural high potency sweetener can be provided as a pure compound or, alternatively, as part of an extract. As used herein, the phrase "synthetic sweetener" refers to any composition which is not found naturally in nature and characteristically has a sweetness potency greater than sucrose, fructose, or glucose, yet has less calories.

In one embodiment, the sweetener is a carbohydrate sweetener. Suitable carbohydrate sweeteners include, but not limited to, the group consisting of sucrose, glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, fucose, rhamnose, arabinose, turanose, sialose and combinations thereof.

Other suitable sweeteners include siamenoside, monatin and its salts (monatin SS, RR, RS, SR), curculin, mogrosides, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, steviolbioside and cyclocarioside I, sugar alcohols such as erythritol, sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and combinations thereof.

In one embodiment, the sweetener is a caloric sweetener or mixture of caloric sweeteners. In another embodiment, the caloric sweetener is selected from sucrose, fructose, glucose, high fructose corn/starch syrup, a beet sugar, a cane sugar, and combinations thereof.

In another embodiment, the sweetener is a rare sugar selected from allulose, gulose, kojibiose, sorbose, lyxose, ribulose, xylose, xylulose, D-allose, L-ribose, D-tagatose, L-glucose, L-fucose, L-arabinose, turanose and combinations thereof.

Exemplary functional ingredients include, but are not limited to, saponins, antioxidants, dietary fiber sources, fatty acids, vitamins, glucosamine, minerals, preservatives, hydration agents, probiotics, prebiotics, weight management agents, osteoporosis management agents, phytoestrogens, long chain primary aliphatic saturated alcohols, phytosterols and combinations thereof.

In certain embodiments, the functional ingredient is at least one saponin. As used herein, the at least one saponin may comprise a single saponin or a plurality of saponins as a functional ingredient for the composition provided herein. Saponins are glycosidic natural plant products comprising an aglycone ring structure and one or more sugar moieties. Non-limiting examples of specific saponins for use in particular embodiments of the invention include group A acetyl saponin, group B acetyl saponin, and group E acetyl saponin. Several common sources of saponins include soybeans, which have approximately 5% saponin content by dry weight, soapwort plants (*Saponaria*), the root of which was used historically as soap, as well as alfalfa, aloe, asparagus, grapes, chickpeas, yucca, and various other beans and weeds. Saponins may be obtained from these sources by using extraction techniques well known to those of ordinary skill in the art. A description of conventional extraction techniques can be found in U.S. Pat. Appl. No. 2005/0123662.

In certain embodiments, the functional ingredient is at least one antioxidant. As used herein, "antioxidant" refers to any substance which inhibits, suppresses, or reduces oxidative damage to cells and biomolecules.

Examples of suitable antioxidants for embodiments of this invention include, but are not limited to, vitamins, vitamin cofactors, minerals, hormones, carotenoids, carotenoid terpenoids, non-carotenoid terpenoids, flavonoids, flavonoid polyphenolics (e.g., bioflavonoids), flavonols, flavones, phenols, polyphenols, esters of phenols, esters of polyphenols, nonflavonoid phenolics, isothiocyanates, and combinations thereof. In some embodiments, the antioxidant is vitamin A, vitamin C, vitamin E, ubiquinone, mineral selenium, manganese, melatonin, α-carotene, β-carotene, lycopene, lutein, zeanthin, crypoxanthin, reservatol, eugenol, quercetin, catechin, gossypol, hesperetin, curcumin, ferulic acid, thymol, hydroxytyrosol, tumeric, thyme, olive oil, lipoic acid, glutathinone, gutamine, oxalic acid, tocopherol-derived compounds, butylated hydroxyanisole (BHA), butylated hydroxytoluene (BHT), ethylenediaminetetraacetic acid (EDTA), tert-butylhydroquinone, acetic acid, pectin, tocotrienol, tocopherol, coenzyme Q10, zeaxanthin, astaxanthin, canthaxantin, saponins, limonoids, kaempfedrol, myricetin, isorhamnetin, proanthocyanidins, quercetin, rutin, luteolin, apigenin, tangeritin, hesperetin, naringenin, erodictyol, flavan-3-ols (e.g., anthocyanidins), gallocatechins, epicatechin and its gallate forms, epigallocatechin and its gallate forms (ECGC) theaflavin and its gallate forms, thearubigins, isoflavone, phytoestrogens, genistein, daidzein, glycitein, anythocyanins, cyaniding, delphinidin, malvidin, pelargonidin, peonidin, petunidin, ellagic acid, gallic acid, salicylic acid, rosmarinic acid, cinnamic acid and its derivatives (e.g., ferulic acid), chlorogenic acid, chicoric acid, gallotannins, ellagitannins, anthoxanthins, betacyanins and other plant pigments, silymarin, citric acid, lignan, antinutrients, bilirubin, uric acid, R-α-lipoic acid, N-acetylcysteine, emblicanin, apple extract, apple skin extract (applephenon), rooibos extract red, rooibos extract, green, hawthorn berry extract, red raspberry extract, green coffee antioxidant (GCA), aronia extract 20%, grape seed extract (VinOseed), cocoa extract, hops extract, mangosteen extract, mangosteen hull extract, cranberry extract, pomegranate extract, pomegranate hull extract, pomegranate seed extract, hawthorn berry extract, pomella pomegranate extract, cinnamon bark extract, grape skin extract, bilberry extract, pine bark extract, pycnogenol, elderberry extract, mulberry root extract, wolfberry (gogi) extract, blackberry extract, blueberry extract, blueberry leaf extract, raspberry extract, turmeric extract, citrus bioflavonoids, black currant, ginger, acai powder, green coffee bean extract, green tea extract, and phytic acid, or combinations thereof. In alternate embodiments, the antioxidant is a synthetic antioxidant such as butylated hydroxytolune or butylated hydroxyanisole, for example. Other sources of suitable antioxidants for embodiments of this invention include, but are not limited to, fruits, vegetables, tea, cocoa, chocolate, spices, herbs, rice, organ meats from livestock, yeast, whole grains, or cereal grains.

Particular antioxidants belong to the class of phytonutrients called polyphenols (also known as "polyphenolics"), which are a group of chemical substances found in plants, characterized by the presence of more than one phenol group per molecule. Suitable polyphenols for embodiments of this invention include catechins, proanthocyanidins, procyanidins, anthocyanins, quercerin, rutin, reservatrol, isoflavones, curcumin, punicalagin, ellagitannin, hesperidin, naringin, citrus flavonoids, chlorogenic acid, other similar materials, and combinations thereof.

In one embodiment, the antioxidant is a catechin such as, for example, epigallocatechin gallate (EGCG). In another embodiment, the antioxidant is chosen from proanthocyanidins, procyanidins or combinations thereof. In particular embodiments, the antioxidant is an anthocyanin. In still other embodiments, the antioxidant is chosen from quercetin, rutin or combinations thereof. In one embodiment, the antioxidant is reservatrol. In another embodiment, the antioxidant is an isoflavone. In still another embodiment, the antioxidant is curcumin. In a yet further embodiment, the antioxidant is chosen from punicalagin, ellagitannin or combinations thereof. In a still further embodiment, the antioxidant is chlorogenic acid.

In certain embodiments, the functional ingredient is at least one dietary fiber. Numerous polymeric carbohydrates having significantly different structures in both composition and linkages fall within the definition of dietary fiber. Such compounds are well known to those skilled in the art, non-limiting examples of which include non-starch polysaccharides, lignin, cellulose, methylcellulose, the hemicelluloses, β-glucans, pectins, gums, mucilage, waxes, inulins, oligosaccharides, fructooligosaccharides, cyclodextrins, chitins, and combinations thereof. Although dietary fiber generally is derived from plant sources, indigestible animal products such as chitins are also classified as dietary fiber. Chitin is a polysaccharide composed of units of acetylglucosamine joined by β(1-4) linkages, similar to the linkages of cellulose.

In certain embodiments, the functional ingredient is at least one fatty acid. As used herein, "fatty acid" refers to any straight chain monocarboxylic acid and includes saturated fatty acids, unsaturated fatty acids, long chain fatty acids, medium chain fatty acids, short chain fatty acids, fatty acid precursors (including omega-9 fatty acid precursors), and esterified fatty acids. As used herein, "long chain polyunsaturated fatty acid" refers to any polyunsaturated carboxylic acid or organic acid with a long aliphatic tail. As used herein, "omega-3 fatty acid" refers to any polyunsaturated fatty acid having a first double bond as the third carbon-carbon bond from the terminal methyl end of its carbon chain. In particular embodiments, the omega-3 fatty acid may comprise a long chain omega-3 fatty acid. As used herein, "omega-6 fatty acid" any polyunsaturated fatty acid having a first double bond as the sixth carbon-carbon bond from the terminal methyl end of its carbon chain.

Suitable omega-3 fatty acids for use in embodiments of the present invention can be derived from algae, fish, animals, plants, or combinations thereof, for example. Examples of suitable omega-3 fatty acids include, but are not limited to, linolenic acid, alpha-linolenic acid, eicosapentaenoic acid, docosahexaenoic acid, stearidonic acid, eicosatetraenoic acid and combinations thereof. In some embodiments, suitable omega-3 fatty acids can be provided in fish oils, (e.g., menhaden oil, tuna oil, salmon oil, bonito oil, and cod oil), microalgae omega-3 oils or combinations thereof. In particular embodiments, suitable omega-3 fatty acids may be derived from commercially available omega-3 fatty acid oils such as Microalgae DHA oil (from Martek, Columbia, MD), OmegaPure (from Omega Protein, Houston, TX), Marinol C-38 (from Lipid Nutrition, Channahon, IL), Bonito oil and MEG-3 (from Ocean Nutrition, Dartmouth, NS), Evogel (from Symrise, Holzminden, Germany), Marine Oil, from tuna or salmon (from Arista Wilton, CT), OmegaSource 2000, Marine Oil, from menhaden and Marine Oil, from cod (from OmegaSource, RTP, NC).

Suitable omega-6 fatty acids include, but are not limited to, linoleic acid, gamma-linolenic acid, dihommo-gamma-linolenic acid, arachidonic acid, eicosadienoic acid, docosadienoic acid, adrenic acid, docosapentaenoic acid and combinations thereof.

Suitable esterified fatty acids for embodiments of the present invention include, but are not limited to, monoacylgycerols containing omega-3 and/or omega-6 fatty acids, diacylgycerols containing omega-3 and/or omega-6 fatty acids, or triacylgycerols containing omega-3 and/or omega-6 fatty acids and combinations thereof.

In certain embodiments, the functional ingredient is at least one vitamin. Suitable vitamins include, vitamin A, vitamin D, vitamin E, vitamin K, vitamin B1, vitamin B2, vitamin B3, vitamin B5, vitamin B6, vitamin B7, vitamin B9, vitamin B12, and vitamin C.

Various other compounds have been classified as vitamins by some authorities. These compounds may be termed pseudo-vitamins and include, but are not limited to, compounds such as ubiquinone (coenzyme Q10), pangamic acid, dimethylglycine, taestrile, amygdaline, flavanoids, para-aminobenzoic acid, adenine, adenylic acid, and s-methylmethionine. As used herein, the term vitamin includes pseudo-vitamins. In some embodiments, the vitamin is a fatsoluble vitamin chosen from vitamin A, D, E, K and combinations thereof. In other embodiments, the vitamin is a water-soluble vitamin chosen from vitamin B1, vitamin B2, vitamin B3, vitamin B6, vitamin B12, folic acid, biotin, pantothenic acid, vitamin C and combinations thereof.

In certain embodiments, the functional ingredient is glucosamine, optionally further comprising chondroitin sulfate.

In certain embodiments, the functional ingredient is at least one mineral. Minerals, in accordance with the teachings of this invention, comprise inorganic chemical elements required by living organisms. Minerals are comprised of a broad range of compositions (e.g., elements, simple salts, and complex silicates) and also vary broadly in crystalline structure. They may naturally occur in foods and beverages, may be added as a supplement, or may be consumed or administered separately from foods or beverages.

Minerals may be categorized as either bulk minerals, which are required in relatively large amounts, or trace minerals, which are required in relatively small amounts. Bulk minerals generally are required in amounts greater than or equal to about 100 mg per day and trace minerals are those that are required in amounts less than about 100 mg per day.

In one embodiment, the mineral is chosen from bulk minerals, trace minerals or combinations thereof. Non-limiting examples of bulk minerals include calcium, chlorine, magnesium, phosphorous, potassium, sodium, and sulfur. Non-limiting examples of trace minerals include chromium, cobalt, copper, fluorine, iron, manganese, molybdenum, selenium, zinc, and iodine. Although iodine generally is classified as a trace mineral, it is required in larger quantities than other trace minerals and often is categorized as a bulk mineral.

In a particular embodiment, the mineral is a trace mineral, believed to be necessary for human nutrition, non-limiting examples of which include bismuth, boron, lithium, nickel, rubidium, silicon, strontium, tellurium, tin, titanium, tungsten, and vanadium.

The minerals embodied herein may be in any form known to those of ordinary skill in the art. For example, in one embodiment, the minerals may be in their ionic form, having either a positive or negative charge. In another embodiment, the minerals may be in their molecular form. For example, sulfur and phosphorous often are found naturally as sulfates, sulfides, and phosphates.

In certain embodiments, the functional ingredient is at least one preservative. In particular embodiments, the preservative is chosen from antimicrobials, antioxidants, antienzymatics or combinations thereof. Non-limiting examples of antimicrobials include sulfites, propionates, benzoates, sorbates, nitrates, nitrites, bacteriocins, salts, sugars, acetic acid, dimethyl dicarbonate (DMDC), ethanol, and ozone. In one embodiment, the preservative is a sulfite. Sulfites include, but are not limited to, sulfur dioxide, sodium bisulfite, and potassium hydrogen sulfite. In another embodiment, the preservative is a propionate. Propionates include, but are not limited to, propionic acid, calcium propionate, and sodium propionate. In yet another embodiment, the preservative is a benzoate. Benzoates include, but are not limited to, sodium benzoate and benzoic acid. In still another embodiment, the preservative is a sorbate. Sorbates include, but are not limited to, potassium sorbate, sodium sorbate, calcium sorbate, and sorbic acid. In a still further embodiment, the preservative is a nitrate and/or a nitrite. Nitrates and nitrites include, but are not limited to, sodium nitrate and sodium nitrite. In another embodiment, the at least one preservative is a bacteriocin, such as, for example, nisin. In still another embodiment, the preservative is ethanol. In yet another embodiment, the preservative is ozone. Non-limiting examples of antienzymatics suitable for use as preservatives in particular embodiments of the invention include ascorbic acid, citric acid, and metal chelating agents such as ethylenediaminetetraacetic acid (EDTA).

In certain embodiments, the functional ingredient is at least one hydration agent. In a particular embodiment, the hydration agent is an electrolyte. Non-limiting examples of electrolytes include sodium, potassium, calcium, magnesium, chloride, phosphate, bicarbonate, and combinations thereof. Suitable electrolytes for use in particular embodiments of this invention are also described in U.S. Patent No. 5,681,569. In one embodiment, the electrolyte is obtained from the corresponding water-soluble salt. Non-limiting examples of salts include chlorides, carbonates, sulfates, acetates, bicarbonates, citrates, phosphates, hydrogen phosphates, tartrates, sorbates, citrates, benzoates, or combinations thereof. In other embodiments, the electrolyte is provided by juice, fruit extracts, vegetable extracts, tea, or tea extracts.

In another particular embodiment, the hydration agent is a carbohydrate to supplement energy stores burned by muscles. Suitable carbohydrates for use in particular embodiments of this invention are described in U.S. Patent Numbers 4,312,856, 4,853,237, 5,681,569, and 6,989,171. Non-limiting examples of suitable carbohydrates include monosaccharides, disaccharides, oligosaccharides, complex polysaccharides or combinations thereof. Non-limiting examples of suitable types of monosaccharides for use in particular embodiments include trioses, tetroses, pentoses, hexoses, heptoses, octoses, and nonoses. Non-limiting examples of specific types of suitable monosaccharides include glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, and sialose. Non-limiting examples of suitable disaccharides include sucrose, lactose, and maltose. Non-limiting examples of suitable oligosaccharides include saccharose, maltotriose, and maltodextrin. In other particular embodiments, the carbohydrates are provided by a corn syrup, a beet sugar, a cane sugar, a juice, or a tea.

In another particular embodiment, the hydration agent is a flavanol that provides cellular rehydration. Flavanols are a class of natural substances present in plants, and generally comprise a 2-phenylbenzopyrone molecular skeleton attached to one or more chemical moieties. Non-limiting examples of suitable flavanols for use in particular embodiments of this invention include catechin, epicatechin, gallocatechin, epigallocatechin, epicatechin gallate, epigallocatechin 3-gallate, theaflavin, theaflavin 3-gallate, theaflavin 3'-gallate, theaflavin 3,3' gallate, thearubigin or combinations thereof. Several common sources of flavanols include tea plants, fruits, vegetables, and flowers. In preferred embodiments, the flavanol is extracted from green tea.

In a particular embodiment, the hydration agent is a glycerol solution to enhance exercise endurance. The ingestion of a glycerol containing solution has been shown to provide beneficial physiological effects, such as expanded blood volume, lower heart rate, and lower rectal temperature.

In certain embodiments, the functional ingredient is chosen from at least one probiotic, prebiotic and combination thereof. The probiotic is a beneficial microorganism that affects the human body's naturally-occurring gastrointestinal microflora. Examples of probiotics include, but are not limited to, bacteria of the genus *Lactobacilli, Bifidobacteria, Streptococci,* or combinations thereof, that confer beneficial effects to humans. In particular embodiments of the invention, the at least one probiotic is chosen from the genus *Lactobacilli.* According to other particular embodiments of this invention, the probiotic is chosen from the genus *Bifidobacteria.* In a particular embodiment, the probiotic is chosen from the genus *Streptococcus.*

Probiotics that may be used in accordance with this invention are well-known to those of skill in the art. Non-limiting examples of foodstuffs comprising probiotics include yogurt, sauerkraut, kefir, kimchi, fermented vegetables, and other foodstuffs containing a microbial element that beneficially affects the host animal by improving the intestinal microbalance.

Prebiotics, in accordance with the embodiments of this invention, include, without limitation, mucopolysaccharides, oligosaccharides, polysaccharides, amino acids, vitamins, nutrient precursors, proteins and combinations thereof. According to a particular embodiment of this invention, the prebiotic is chosen from dietary fibers, including, without limitation, polysaccharides and oligosaccharides. Non-limiting examples of oligosaccharides that are categorized as prebiotics in accordance with particular embodiments of this invention include fructooligosaccharides, inulins, isomalto-oligosaccharides, lactilol, lactosucrose, lactulose, pyrodextrins, soy oligosaccharides, transgalacto-oligosaccharides, and xylo-oligosaccharides. In other embodiments, the prebiotic is an amino acid. Although a number of known prebiotics break down to provide carbohydrates for probiotics, some probiotics also require amino acids for nourishment.

Prebiotics are found naturally in a variety of foods including, without limitation, bananas, berries, asparagus, garlic, wheat, oats, barley (and other whole grains), flaxseed, tomatoes, Jerusalem artichoke, onions and chicory, greens (e.g., dandelion greens, spinach, collard greens, chard, kale, mustard greens, turnip greens), and legumes (e.g., lentils, kidney beans, chickpeas, navy beans, white beans, black beans).

In certain embodiments, the functional ingredient is at least one weight management agent. As used herein, "a weight management agent" includes an appetite suppressant and/or a thermogenesis agent. As used herein, the phrases "appetite suppressant", "appetite satiation compositions", "satiety agents", and "satiety ingredients" are synonymous. The phrase "appetite suppressant" describes macronutrients, herbal extracts, exogenous hormones, anorectics, anorexigenics, pharmaceutical drugs, and combinations thereof, that when delivered in an effective amount, suppress, inhibit, reduce, or otherwise curtail a person's appetite. The phrase "thermogenesis agent" describes macronutrients, herbal extracts, exogenous hormones, anorectics, anorexigenics, pharmaceutical drugs, and combinations thereof, that when delivered in an effective amount, activate or otherwise enhance a person's thermogenesis or metabolism.

Suitable weight management agents include macronutrients selected from the group consisting of proteins, carbohydrates, dietary fats, and combinations thereof. Consumption of proteins, carbohydrates, and dietary fats stimulates the release of peptides with appetitesuppressing effects. For example, consumption of proteins and dietary fats stimulates the release of the gut hormone cholecytokinin (CCK), while consumption of carbohydrates and dietary fats stimulates release of Glucagon-like peptide 1 (GLP-1).

Suitable macronutrient weight management agents also include carbohydrates. Carbohydrates generally comprise sugars, starches, cellulose and gums that the body converts into glucose for energy. Carbohydrates often are classified into two categories, digestible carbohydrates (e.g., monosaccharides, disaccharides, and starch) and non-digestible carbohydrates (e.g., dietary fiber). Studies have shown that non-digestible carbohydrates and complex polymeric carbohydrates having reduced absorption and digestibility in the small intestine stimulate physiologic responses that inhibit food intake. Accordingly, the carbohydrates embodied herein desirably comprise non-digestible carbohydrates or carbohydrates with reduced digestibility. Non-limiting examples of such carbohydrates include polydextrose; inulin; monosaccharide-derived polyols such as erythritol, mannitol, xylitol, and sorbitol; disaccharidederived alcohols such as isomalt, lactitol, and maltitol; and hydrogenated starch hydrolysates. Carbohydrates are described in more detail herein below.

In another particular embodiment, the weight management agent is a dietary fat. Dietary fats are lipids comprising combinations of saturated and unsaturated fatty acids. Polyunsaturated fatty acids have been shown to have a greater satiating power than mono-unsaturated fatty acids. Accordingly, the dietary fats embodied herein desirably comprise poly-unsaturated fatty acids, non-limiting examples of which include triacylglycerols.

In another particular embodiment, the weight management agent is an herbal extract. Extracts from numerous types of plants have been identified as possessing appetite suppressant properties. Non-limiting examples of plants whose extracts have appetite suppressant properties include plants of the genus *Hoodia, Trichocaulon, Caralluma, Stapelia, Orbea, Asclepias,* and *Camelia.* Other embodiments include extracts derived from Gymnema Sylvestre, Kola Nut, Citrus Auran tium, Yerba Mate, Griffonia Simplicifolia, Guarana, myrrh, guggul Lipid, and black current seed oil.

The herbal extracts may be prepared from any type of plant material or plant biomass. Non-limiting examples of plant material and biomass include the stems, roots, leaves, dried powder obtained from the plant material, and sap or dried sap. The herbal extracts generally are prepared by extracting sap from the plant and then spray-drying the sap. Alternatively, solvent extraction procedures may be employed. Following the initial extraction, it may be desirable to further fractionate the initial extract (e.g., by column chromatography) in order to obtain an herbal extract with enhanced activity. Such techniques are well known to those of ordinary skill in the art.

In one embodiment, the herbal extract is derived from a plant of the genus *Hoodia. A* sterol glycoside of *Hoodia,* known as P57, is believed to be responsible for the appetitesuppressant effect of the *Hoodia* species. In another embodiment, the herbal extract is derived from a plant of the genus *Caralluma,* non-limiting examples of which include caratuberside A, caratuberside B, bouceroside I, bouceroside II, bouceroside III, bouceroside IV, bouceroside V, bouceroside VI, bouceroside VII, bouceroside VIII, bouceroside IX, and bouceroside X. In another embodiment, the at least one herbal extract is derived from a plant of the genus *Trichocaulon. Trichocaulon* plants are succulents that generally are native to southern Africa, similar to *Hoodia,* and include the species *T. piliferum* and *T. officinale.* In another embodiment, the herbal extract is derived from a plant of the genus *Stapelia* or *Orbea.* Not wishing to be bound by any theory, it is believed that the compounds exhibiting appetite suppressant activity are saponins, such as pregnane glycosides, which include stavarosides A, B, C, D, E, F, G, H, I, J, and K. In another embodiment, the herbal extract is derived from a plant of the genus *Asclepias.* Not wishing to be bound by any theory, it is believed that the extracts comprise steroidal compounds, such as pregnane glycosides and pregnane aglycone, having appetite suppressant effects.

In another particular embodiment, the weight management agent is an exogenous hormone having a weight management effect. Non-limiting examples of such hormones include CCK, peptide YY, ghrelin, bombesin and gastrin-releasing peptide (GRP), enterostatin, apolipoprotein A-IV, GLP-1, amylin, somastatin, and leptin.

In another embodiment, the weight management agent is a pharmaceutical drug. Non-limiting examples include phentenime, diethylpropion, phendimetrazine, sibutramine, rimonabant, oxyntomodulin, floxetine hydrochloride, ephedrine, phenethylamine, or other stimulants.

In certain embodiments, the functional ingredient is at least one osteoporosis management agent. In certain embodiments, the osteoporosis management agent is at least one calcium source. According to a particular embodiment, the calcium source is any compound containing calcium, including salt complexes, solubilized species, and other forms of calcium. Non-limiting examples of calcium sources include amino acid chelated calcium, calcium carbonate, calcium oxide, calcium hydroxide, calcium sulfate, calcium chloride, calcium phosphate, calcium hydrogen phosphate, calcium dihydrogen phosphate, calcium citrate, calcium malate, calcium citrate malate, calcium gluconate, calcium tartrate, calcium lactate, solubilized species thereof, and combinations thereof.

According to a particular embodiment, the osteoporosis management agent is a magnesium soucrce. The magnesium source is any compound containing magnesium, including salt complexes, solubilized species, and other forms of magnesium. Non-limiting examples of magnesium sources include magnesium chloride, magnesium citrate, magnesium gluceptate, magnesium gluconate, magnesium lactate, magnesium hydroxide, magnesium picolate, magnesium sulfate, solubilized species thereof, and mixtures thereof. In another particular embodiment, the magnesium source comprises an amino acid chelated or creatine chelated magnesium.

In other embodiments, the osteoporosis agent is chosen from vitamins D, C, K, their precursors and/or beta-carotene and combinations thereof.

Numerous plants and plant extracts also have been identified as being effective in the prevention and treatment of osteoporosis. Non-limiting examples of suitable plants and plant extracts as osteoporosis management agents include species of the genus *Taraxacum* and *Amelanchier,* as disclosed in U.S. Patent Publication No. 2005/0106215, and species of the genus *Lindera, Artemisia, Acorus, Carthamus, Carum, Cnidium, Curcuma, Cyperus, Juniperus, Prunus, Iris, Cichorium, Dodonaea, Epimedium, Erigonoum, Soya, Mentha, Ocimum, thymus, Tanacetum, Plantago, Spearmint, Bixa, Vitis, Rosemarinus, Rhus,* and *Anethum,* as disclosed in U.S. Patent Publication No. 2005/0079232.

In certain embodiments, the functional ingredient is at least one phytoestrogen. Phytoestrogens are compounds found in plants which can typically be delivered into human bodies by ingestion of the plants or the plant parts having the phytoestrogens. As used herein, "phytoestrogen" refers to any substance which, when introduced into a body causes an estrogen-like effect of any degree. For example, a phytoestrogen may bind to estrogen receptors within the body and have a small estrogen-like effect.

Examples of suitable phytoestrogens for embodiments of this invention include, but are not limited to, isoflavones, stilbenes, lignans, resorcyclic acid lactones, coumestans, coumestroI, equol, and combinations thereof. Sources of suitable phytoestrogens include, but are not limited to, whole grains, cereals, fibers, fruits, vegetables, black cohosh, agave root, black currant, black haw, chasteberries, cramp bark, dong quai root, devil's club root, false unicorn root, ginseng root, groundsel herb, licorice, liferoot herb, motherwort herb, peony root, raspberry leaves, rose family plants, sage leaves, sarsaparilla root, saw palmetto berried, wild yam root, yarrow blossoms, legumes, soybeans, soy products (e.g., miso, soy flour, soymilk, soy nuts, soy protein isolate, tempen, or tofu) chick peas, nuts, lentils, seeds, clover, red clover, dandelion leaves, dandelion roots, fenugreek seeds, green tea, hops, red wine, flaxseed, garlic, onions, linseed, borage, butterfly weed, caraway, chaste tree, vitex, dates, dill, fennel seed, gotu kola, milk thistle, pennyroyal, pomegranates, southernwood, soya flour, tansy, and root of the kudzu vine (pueraria root) and the like, and combinations thereof.

Isoflavones belong to the group of phytonutrients called polyphenols. In general, polyphenols (also known as "polyphenolics"), are a group of chemical substances found in plants, characterized by the presence of more than one phenol group per molecule.

Suitable phytoestrogen isoflavones in accordance with embodiments of this invention include genistein, daidzein, glycitein, biochanin A, formononetin, their respective naturally occurring glycosides and glycoside conjugates, matairesinol, secoisolariciresinol, enterolactone, enterodiol, textured vegetable protein, and combinations thereof.

Suitable sources of isoflavones for embodiments of this invention include, but are not limited to, soy beans, soy products, legumes, alfalfa sprouts, chickpeas, peanuts, and red clover.

In certain embodiments, the functional ingredient is at least one long chain primary aliphatic saturated alcohol. Long-chain primary aliphatic saturated alcohols are a diverse group of organic compounds. The term alcohol refers to the fact these compounds feature a hydroxyl group (-OH) bound to a carbon atom. Non-limiting examples of particular long-chain primary aliphatic saturated alcohols for use in particular embodiments of the invention include the 8 carbon atom 1-octanol, the 9 carbon 1-nonanol, the 10 carbon atom 1-decanol, the 12 carbon atom 1-dodecanol, the 14 carbon atom 1-tetradecanol, the 16 carbon atom 1-hexadecanol, the 18 carbon atom 1-octadecanol, the 20 carbon atom 1-eicosanol, the 22 carbon 1-docosanol, the 24 carbon 1-tetracosanol, the 26 carbon 1-hexacosanol, the 27 carbon 1-heptacosanol, the 28 carbon 1-octanosol, the 29 carbon 1-nonacosanol, the 30 carbon 1-triacontanol, the 32 carbon 1-dotriacontanol, and the 34 carbon 1-tetracontanol.

In one embodiment, the long-chain primary aliphatic saturated alcohol is a policosanol. Policosanol is the term for a mixture of long-chain primary aliphatic saturated alcohols composed primarily of 28 carbon 1-octanosol and 30 carbon 1-triacontanol, as well as other alcohols in lower concentrations such as 22 carbon 1-docosanol, 24 carbon 1-tetracosanol, 26 carbon 1-hexacosanol, 27 carbon 1-heptacosanol, 29 carbon 1-nonacosanol, 32 carbon 1-dotriacontanol, and 34 carbon 1-tetracontanol.

In certain embodiments, the functional ingredient is at least one phytosterol, phytostanol or combination thereof. As used herein, the phrases "stanol", "plant stanol" and "phytostanol" are synonymous. Plant sterols and stanols are present naturally in small quantities in many fruits, vegetables, nuts, seeds, cereals, legumes, vegetable oils, bark of the trees and other plant sources. Sterols are a subgroup of steroids with a hydroxyl group at C-3. Generally, phytosterols have a double bond within the steroid nucleus, like cholesterol; however, phytosterols also may comprise a substituted side chain (R) at C-24, such as an ethyl or methyl group, or an additional double bond. The structures of phytosterols are well known to those of skill in the art.

At least 44 naturally-occurring phytosterols have been discovered, and generally are derived from plants, such as corn, soy, wheat, and wood oils; however, they also may be produced synthetically to form compositions identical to those in nature or having properties similar to those of naturally-occurring phytosterols. Non-limiting suitable phytosterols include, but are not limited to, 4-desmethylsterols (e.g., β-sitosterol, campesterol, stigmasterol, brassicasterol, 22-dehydrobrassicasterol, and Δ5-avenasterol), 4-monomethyl sterols, and 4,4-dimethyl sterols (triterpene alcohols) (e.g., cycloartenol, 24-methylenecycloartanol, and cyclobranol).

As used herein, the phrases "stanol", "plant stanol" and "phytostanol" are synonymous. Phytostanols are saturated sterol alcohols present in only trace amounts in nature and also may be synthetically produced, such as by hydrogenation of phytosterols. Suitable phytostanols include, but are not limited to, β-sitostanol, campestanol, cycloartanol, and saturated forms of other triterpene alcohols.

Both phytosterols and phytostanols, as used herein, include the various isomers such as the α and β isomers. The phytosterols and phytostanols of the present invention also may be in their ester form. Suitable methods for deriving the esters of phytosterols and phytostanols are well known to those of ordinary skill in the art, and are disclosed in U.S. Patent Numbers 6,589,588, 6,635,774, 6,800,317, and U.S. Patent Publication Number 2003/0045473. Non-limiting examples of suitable phytosterol and phytostanol esters include sitosterol acetate, sitosterol oleate, stigmasterol oleate, and their corresponding phytostanol esters. The phytosterols and phytostanols of the present invention also may include their derivatives.

Exemplary additives include, but not limited to, carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, caffeine, flavorants and flavoring ingredients, astringent compounds, proteins or protein hydrolysates, surfactants, emulsifiers, plant extracts, flavonoids, alcohols, polymers and combinations thereof.

In one embodiment, the composition further comprises one or more polyols. The term "polyol", as used herein, refers to a molecule that contains more than one hydroxyl group. A polyol may be a diol, triol, or a tetraol which contains 2, 3, and 4 hydroxyl groups respectively. A polyol also may contain more than 4 hydroxyl groups, such as a pentaol, hexaol, heptaol, or the like, which contain 5, 6, or 7 hydroxyl groups, respectively. Additionally, a polyol also may be a sugar alcohol, polyhydric alcohol, or polyalcohol which is a reduced form of carbohydrate, wherein the carbonyl group (aldehyde or ketone, reducing sugar) has been reduced to a primary or secondary hydroxyl group. Non-limiting examples of polyols in some embodiments include maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentio-oligosaccharides, reduced maltose syrup, reduced glucose syrup, and sugar alcohols or any other carbohydrates capable of being reduced which do not adversely affect taste.

Suitable amino acid additives include, but are not limited to, aspartic acid, arginine, glycine, glutamic acid, proline, threonine, theanine, cysteine, cystine, alanine, valine, tyrosine, leucine, arabinose, trans-4-hydroxyproline, isoleucine, asparagine, serine, lysine, histidine, ornithine, methionine, carnitine, aminobutyric acid (α-, β-, and/or δ-isomers), glutamine, hydroxyproline, taurine, norvaline, sarcosine, and their salt forms such as sodium or potassium salts or acid salts. The amino acid additives also may be in the D- or L-configuration and in the mono-, di-, or tri-form of the same or different amino acids. Additionally, the amino acids may be α-, β-, γ- and/or δ-isomers if appropriate. Combinations of the foregoing amino acids and their corresponding salts (*e.g*., sodium, potassium, calcium, magnesium salts or other alkali or alkaline earth metal salts thereof, or acid salts) also are suitable additives in some embodiments. The amino acids may be natural or synthetic. The amino acids also may be modified. Modified amino acids refers to any amino acid wherein at least one atom has been added, removed, substituted, or combinations thereof (*e.g*., N-alkyl amino acid, N-acyl amino acid, or N-methyl amino acid). Non-limiting examples of modified amino acids include amino acid derivatives such as trimethyl glycine, N-methyl-glycine, and N-methyl-alanine. As used herein, modified amino acids encompass both modified and unmodified amino acids. As used herein, amino acids also encompass both peptides and polypeptides (*e.g*., dipeptides, tripeptides, tetrapeptides, and pentapeptides) such as glutathione and L-alanyl-L-glutamine. Suitable polyamino acid additives include poly-L-aspartic acid, poly-L-lysine (e.g., poly-L-α-lysine or poly-L-ε-lysine), poly-L-omithine (*e.g*., poly-L-α-ornithine or poly-L-ε-ornithine), poly-L-arginine, other polymeric forms of amino acids, and salt forms thereof (*e.g*., calcium, potassium, sodium, or magnesium salts such as L-glutamic acid mono sodium salt). The poly-amino acid additives also may be in the D- or L-configuration. Additionally, the poly-amino acids may be α-, β-, γ-, δ-, and ε-isomers if appropriate. Combinations of the foregoing poly-amino acids and their corresponding salts (*e.g*., sodium, potassium, calcium, magnesium salts or other alkali or alkaline earth metal salts thereof or acid salts) also are suitable additives in some embodiments. The poly-amino acids described herein also may comprise co-polymers of different amino acids. The poly-amino acids may be natural or synthetic. The poly-amino acids also may be modified, such that at least one atom has been added, removed, substituted, or combinations thereof (e.g., N-alkyl polyamino acid or N-acyl poly-amino acid). As used herein, poly-amino acids encompass both modified and unmodified poly-amino acids. For example, modified poly-amino acids include, but are not limited to, poly-amino acids of various molecular weights (MW), such as poly-L-α-lysine with a MW of 1,500, MW of 6,000, MW of 25,200, MW of 63,000, MW of 83,000, or MW of 300,000.

Suitable sugar acid additives include, but are not limited to, aldonic, uronic, aldaric, alginic, gluconic, glucuronic, glucaric, galactaric, galacturonic, and salts thereof (e.g., sodium, potassium, calcium, magnesium salts or other physiologically acceptable salts), and combinations thereof.

Suitable nucleotide additives include, but are not limited to, inosine monophosphate ("IMP"), guanosine monophosphate ("GMP"), adenosine monophosphate ("AMP"), cytosine monophosphate (CMP), uracil monophosphate (UMP), inosine diphosphate, guanosine diphosphate, adenosine diphosphate, cytosine diphosphate, uracil diphosphate, inosine triphosphate, guanosine triphosphate, adenosine triphosphate, cytosine triphosphate, uracil triphosphate, alkali or alkaline earth metal salts thereof, and combinations thereof. The nucleotides described herein also may comprise nucleotide-related additives, such as nucleosides or nucleic acid bases (*e.g*., guanine, cytosine, adenine, thymine, uracil).

Suitable organic acid additives include any compound which comprises a -COOH moiety, such as, for example, C2-C30 carboxylic acids, substituted hydroxyl C2-C30 carboxylic acids, butyric acid (ethyl esters), substituted butyric acid (ethyl esters), benzoic acid, substituted benzoic acids (e.g., 2,4-dihydroxybenzoic acid), substituted cinnamic acids, hydroxyacids, substituted hydroxybenzoic acids, anisic acid substituted cyclohexyl carboxylic acids, tannic acid, aconitic acid, lactic acid, tartaric acid, citric acid, isocitric acid, gluconic acid, glucoheptonic acids, adipic acid, hydroxycitric acid, malic acid, fruitaric acid (a blend of malic, fumaric, and tartaric acids), fumaric acid, maleic acid, succinic acid, chlorogenic acid, salicylic acid, creatine, caffeic acid, bile acids, acetic acid, ascorbic acid, alginic acid, erythorbic acid, polyglutamic acid, glucono delta lactone, and their alkali or alkaline earth metal salt derivatives thereof. In addition, the organic acid additives also may be in either the D- or L-configuration.

Suitable organic acid additive salts include, but are not limited to, sodium, calcium, potassium, and magnesium salts of all organic acids, such as salts of citric acid, malic acid, tartaric acid, fumaric acid, lactic acid (*e.g.,* sodium lactate), alginic acid (*e.g.,* sodium alginate), ascorbic acid (*e.g.,* sodium ascorbate), benzoic acid (*e.g.,* sodium benzoate or potassium benzoate), sorbic acid and adipic acid. The examples of the organic acid additives described optionally may be substituted with at least one group chosen from hydrogen, alkyl, alkenyl, alkynyl, halo, haloalkyl, carboxyl, acyl, acyloxy, amino, amido, carboxyl derivatives, alkylamino, dialkylamino, arylamino, alkoxy, aryloxy, nitro, cyano, sulfo, thiol, imine, sulfonyl, sulfenyl, sulfinyl, sulfamyl, carboxalkoxy, carboxamido, phosphonyl, phosphinyl, phosphoryl, phosphino, thioester, thioether, anhydride, oximino, hydrazino, carbamyl, phosphor or phosphonato. In particular embodiments, the organic acid additive is present in the sweetener composition in an amount effective to provide a concentration from about 10 ppm to about 5,000 ppm when present in a consumable, such as, for example, a beverage.

Suitable inorganic acid additives include, but are not limited to, phosphoric acid, phosphorous acid, polyphosphoric acid, hydrochloric acid, sulfuric acid, carbonic acid, sodium dihydrogen phosphate, and alkali or alkaline earth metal salts thereof (*e.g*., inositol hexaphosphate Mg/Ca).

Suitable bitter compound additives include, but are not limited to, caffeine, quinine, urea, bitter orange oil, naringin, quassia, and salts thereof.

Suitable flavorants and flavoring ingredient additives include, but are not limited to, vanillin, vanilla extract, mango extract, cinnamon, citrus, coconut, ginger, viridiflorol, almond, menthol (including menthol without mint), grape skin extract, and grape seed extract. "Flavorant" and "flavoring ingredient" are synonymous and can include natural or synthetic substances or combinations thereof. Flavorants also include any other substance which imparts flavor and may include natural or non-natural (synthetic) substances which are safe for human or animals when used in a generally accepted range. Non-limiting examples of proprietary flavorants include Dohler^{™} Natural Flavoring Sweetness Enhancer K14323 (Döhler^{™}, Darmstadt, Germany), Symrise^{™} Natural Flavor Mask for Sweeteners 161453 and 164126 (Symrise^{™}, Holzminden, Germany), Natural Advantage^{™} Bitterness Blockers 1, 2, 9 and 10 (Natural Advantage^{™}, Freehold, New Jersey, U.S.A.), and Sucramask^{™} (Creative Research Management, Stockton, California, U.S.A.).

Suitable polymer additives include, but are not limited to, chitosan, pectin, pectic, pectinic, polyuronic, polygalacturonic acid, starch, food hydrocolloid or crude extracts thereof (e.g., gum acacia senegal (Fibergum^{™}), gum acacia seyal, carageenan), poly-L-lysine (e.g., poly-L-α-lysine or poly-L-ε-lysine), poly-L-ornithine (e.g., poly-L-α-ornithine or poly-L-ε-ornithine), polypropylene glycol, polyethylene glycol, poly(ethylene glycol methyl ether), polyarginine, polyaspartic acid, polyglutamic acid, polyethylene imine, alginic acid, sodium alginate, propylene glycol alginate, and sodium polyethyleneglycolalginate, sodium hexametaphosphate and its salts, and other cationic polymers and anionic polymers.

Suitable protein or protein hydrolysate additives include, but are not limited to, bovine serum albumin (BSA), whey protein (including fractions or concentrates thereof such as 90% instant whey protein isolate, 34% whey protein, 50% hydrolyzed whey protein, and 80% whey protein concentrate), soluble rice protein, soy protein, protein isolates, protein hydrolysates, reaction products of protein hydrolysates, glycoproteins, and/or proteoglycans containing amino acids (e.g., glycine, alanine, serine, threonine, asparagine, glutamine, arginine, valine, isoleucine, leucine, norvaline, methionine, proline, tyrosine, hydroxyproline, and the like), collagen (e.g., gelatin), partially hydrolyzed collagen (e.g., hydrolyzed fish collagen), and collagen hydrolysates (e.g., porcine collagen hydrolysate).

Suitable surfactant additives include, but are not limited to, polysorbates (e.g., polyoxyethylene sorbitan monooleate (polysorbate 80), polysorbate 20, polysorbate 60), sodium dodecylbenzenesulfonate, dioctyl sulfosuccinate or dioctyl sulfosuccinate sodium, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauric arginate, sodium stearoyl lactylate, sodium taurocholate, lecithins, sucrose oleate esters, sucrose stearate esters, sucrose palmitate esters, sucrose laurate esters, and other emulsifiers, and the like.

Suitable flavonoid additives are classified as flavonols, flavones, flavanones, flavan-3-ols, isoflavones, or anthocyanidins. Non-limiting examples of flavonoid additives include, but are not limited to, catechins (e.g., green tea extracts such as Polyphenon^{™} 60, Polyphenon^{™} 30, and Polyphenon^{™} 25 (Mitsui Norin Co., Ltd., Japan), polyphenols, rutins (e.g., enzyme modified rutin Sanmelin^{™} AO (San-fi Gen F.F.I., Inc., Osaka, Japan)), neohesperidin, naringin, neohesperidin dihydrochalcone, and the like.

Suitable alcohol additives include, but are not limited to, ethanol.

Suitable astringent compound additives include, but are not limited to, tannic acid, europium chloride (EuCl₃), gadolinium chloride (GdCl₃), terbium chloride (TbCl₃), alum, tannic acid, and polyphenols (e.g., tea polyphenols).

### C. Concentrates

The present invention also provides concentrates comprising water and a blend of the present invention or a composition comprising a blend of the present invention (hereinafter "concentrates of the present invention").

Concentrates of the present invention contain blends of the present invention in concentrations of about 0.25 wt% to about 3 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt% or at least about 1.0 wt%, at least about 1.5 wt%, at least about 2.0 wt%, or any range between. In one embodiment, the concentrates are about 0.25 wt% to about 0.4 wt%.

Concentrates of the present invention are solutions, i.e. they are not cloudy and there are no precipitates or particulates present for at least about 6 hours after preparation. In some embodiments, the concentrate is clear by visual inspection for at least 1 day, at least 3 days, at least 7 days, at least 14 days, at least one month, at least 3 months or at least 6 months or more.

In one embodiment, a concentrate of the present invention is prepared from a super concentrate. The super concentrate is prepared by (i) combining the relevant blend of the present invention and water at room temperature to provide a mixture (both the blend of the present invention and water are present in amounts necessary to provide the desired super concentrate steviol glycoside concentration/wt%) and (ii) stirring the mixture at room temperature for at least 10 minutes. The stirring time can vary depending on the amounts of both blend and water used. As such, the mixture can be stirred for at least 1 hour, at least 3 hours, at least 5 hours, at least 10 hours or at least 24 hours. The resulting super concentrate is a cloudy mixture, i.e. not a solution.

The concentrates of the present invention are prepared by (i) diluting the super concentrate to the desired steviol glycoside concentration/wt% with water and (ii) mixing for at least 10 minutes. Again, the mixing time can vary. As such, the mixture can be stirred for at least 1 hour, at least 24 hours or at least 90 hours.

Alternatively, the concentrates of the present invention are prepared by (i) combining the relevant blend of the present invention and water at room temperature in the relevant amounts required to achieve the desired blend concentration/wt% and (ii) mixing for at least 10 minutes. Again, the mixing time can vary. As such, the mixture can be stirred for at least 1 hour, at least 24 hours or at least 90 hours.

### D. Beverage Syrups

The present invention also provides beverage syrups comprising blends of the present invention. In one embodiment, a method of making a beverage syrup comprises combining one or more beverage syrup ingredients with a concentrate of the present invention. In one embodiment, the one or more beverage syrup ingredients are added to a concentrate to provide a beverage syrup.

In other embodiments, a concentrate of the present invention can be diluted prior to combination with beverage syrup ingredients. The dilution can be done at once or in a serial fashion. The temperature for dilution is preferably the same temperature at which the beverage syrup ingredients are formulated, typically room temperature- but not above about 70 °C for steviol glycosides or other thermally sensitive ingredients.

The skilled practitioner recognizes that beverage syrup ingredients can be added singularly or in combination. Also, solutions of dry beverage syrup ingredients can be made and used to add to the bulk quantity of water. Beverage syrup ingredients typically are added to the bulk quantity of water in an order that minimizes potential adverse interactions between ingredients or potential adverse effect on an ingredient. For example, nutrients that are temperature-sensitive might be added during a relatively low-temperature portion toward the end of the manufacturing process. Similarly, flavors and flavor compounds often are added just before completion of the syrup to minimize potential loss of volatile components and to minimize flavor loss in any form. Often, acidification is one of the last steps, typically carried out before temperature-sensitive, volatile, and flavor materials are added. Thus, flavors or flavor components or other volatile materials and nutrients typically are added at an appropriate time and at an appropriate temperature.

Beverage syrup ingredients include, but are not limited to, the additional sweeteners, functional ingredients and additives provided hereinabove.

The amount of additional sweetener in the beverage syrup can vary. In one embodiment, the beverage syrup comprises from about 1 ppm to about 10 wt% additional sweetener.

The amount of functional ingredient in the beverage syrup can vary. In one embodiment, the beverage syrup comprises from about 1 ppm to about 10 wt% of a functional ingredient.

The amount of additive in the beverage syrup can vary. In one embodiment, the beverage syrup comprises from about 1 ppm to about 10 wt% of an additive.

The pH of the beverage syrup is typically from about 2.0 to about 5, such as, for example, from about 2.5 to about 4. The pH may be adjusted by addition of a suitable acid or base such as, but not limited to phosphoric acid, citric acid, or sodium hydroxide.

The resulting beverage syrup can be packaged and optionally stored. Alternatively, a beverage syrup may be used essentially immediately to manufacture beverages, which typically are packaged for distribution. A beverage syrup also may be distributed to bottlers, who package beverages made by addition of water and perhaps other materials like carbonation.

The beverage syrup can be a full-calorie beverage syrup such that a ready-to-drink beverage prepared from the beverage syrup has up to about 120 calories per 8 oz serving.

The beverage syrup can be a mid-calorie beverage syrup, such that a ready-to-drink beverage prepared from the beverage syrup has up to about 60 calories per 8 oz. serving.

The beverage syrup can be a low-calorie beverage syrup, such that a ready-to-drink beverage prepared from the beverage syrup has up to about 40 calories per 8 oz. serving.

The beverage syrup can be a zero-calorie beverage syrup, such that a ready-to-drink beverage prepared from the beverage syrup has less than about 5 calories per 8 oz. serving.

### E. Beverages

The present invention also provides ready-to-drink beverages prepared from the beverage syrups described herein and methods of preparing ready-to-drink beverages. In some embodiments, the beverage syrup is a concentrate of the present invention, i.e. without additional beverage ingredients.

Ready-to-drink beverages include carbonated and non-carbonated beverages. Carbonated beverages include, but are not limited to, frozen carbonated beverages, enhanced sparkling beverages, cola, fruit-flavored sparkling beverages (e.g. lemon-lime, orange, grape, strawberry and pineapple), ginger-ale, soft drinks and root beer. Non-carbonated beverages include, but are not limited to, fruit juice, fruit-flavored juice, juice drinks, nectars, vegetable juice, vegetableflavored juice, sports drinks, energy drinks, enhanced water drinks, enhanced water with vitamins, near water drinks (e.g., water with natural or synthetic flavorants), coconut water, tea type drinks (e.g. black tea, green tea, red tea, oolong tea), coffee, cocoa drink, beverage containing milk components (e.g. milk beverages, coffee containing milk components, café au lait, milk tea, fruit milk beverages), beverages containing cereal extracts and smoothies.

A method of preparing a beverage comprises mixing a beverage syrup described herein with an appropriate quantity of diluting water.

Typically, the volumetric ratio of syrup to water is between 1:3 to 1:8, such as, for example, between 1:3 and 1:8, between 1:3 and 1:7, between 1:3 and 1:6, between 1:3 and 1:5, between 1:3 and 1:4, between 1:4 and 1:8, between 1:4 and 1:7, between 1:4 and 1:6, between 1:4 and 1:5, between 1:5 and 1:8, between 1:5 and 1:7, between 1:5 and 1:6, between 1:6 and 1:8, between 1:6 and 1:7 and between 1:7 and 1:8. In a particular embodiment, the volumetric ratio of syrup to water is about 1:5.5.

The temperature at which the mixing is done is preferably under about 70 °C to minimize degradation of steviol glycosides.

In one embodiment, the beverage is a carbonated beverage (e.g. fountain drink or soft drink) and the diluting water is carbonated water. The beverage is typically dispensed for immediate consumption.

Other types of water typical in beverage manufacturing and be used to prepare beverages, e.g. deionized water, distilled water, reverse osmosis water, carbon-treated water, purified water, demineralized water and combinations thereof.

Beverages prepared from concentrates or beverage syrups of the instant invention comprise from about 400 ppm to about 600 ppm steviol glycosides, such as, for example, about 500 ppm.

In some embodiments, the blend of the present invention is the only sweetener, i.e. the only substance that provides detectable sweetness to the beverage. Such beverages include, e.g. carbonated beverages, for example colas.

The beverage can be a full-calorie beverage that has up to about 120 calories per 8 oz serving.

The beverage can be a mid-calorie beverage that has up to about 60 calories per 8 oz. serving.

The beverage can be a low-calorie beverage that has up to about 40 calories per 8 oz. serving.

The beverage can be a zero-calorie that has less than about 5 calories per 8 oz. serving.

### EXAMPLES

In the following examples, "RebM80" refers to a steviol glycoside mixture containing at least 80% Reb M by weight (the majority of the remainder is Reb D). The total steviol glycoside content of the mixture is at least 95%.

"A95" refers to a blend having the following content:

| **A95 Component** | **Percent, as determined by HPLC** |
|---|---|
| Rebaudioside E | 0.86 |
| Rebaudioside O | 1.37 |
| Rebaudioside D | 63.95 |
| Rebaudioside N | 2.95 |
| Rebaudioside M | 25.37 |
| Rebaudioside A | 1.32 |
| Stevioside | 0.03 |
| Rebaudioside C | 0.01 |
| Rebaudioside B | 0.22 |
| **Total Steviol Glycoside Content** | **96.07** |

Methods of obtaining A95 are provided in WO 2017/059414.

Reb M95 (crystalline form), Reb M80 (crystalline form), Reb M80 (amorphous form), Reb D95 (crystalline form), A95(amorphous form), Reb A, Alpha (reb A/reb B blend) & Glycosylated Steviol Glycosides (NSF02) were obtained from Pure Circle. Reb E 95% was obtained from Blue California. Quillaja extract is a sample from Naturex. Allulose (77% solids) was received from Tate & Lyle. Enzyme modified isoquercitrin (EMIQ) was obtained from San Ei Gen. Alpha, Beta and Gama-Cyclodextrin, W6, W7 & W8 were obtained from Wacker Chemicals. S-8131, S-818 and S-651 are food grade ingredients and obtained from Lab 4F. All of ingredients in this study were used without further processing or purification. De-ionized water was used for all experiments.

### EXAMPLE 1: Replacement of RebM80 with Reb A or Mogroside V (10-20 wt%) (not part of the invention)

Super concentrates (all 3 wt% total) were prepared by combining the indicated ingredients with water at room temperature. The mixtures were stirred for 30 mins. The appearance of the super concentrate was observed at seven time points after stirring ceased: 2 minutes, 7 minutes, 12 minutes, 17 minutes, 22 minutes, 27 minutes and 30 minutes.

**Table 2: Amorphous RebM80 Replacement with Reb A and Mogroside V**

| **Sample** | **RebM80 (wt%)** | **Reb A (wt%)** | **Mogroside V (wt%)** | **Observations** |
|---|---|---|---|---|
| **Control** | 3.0 | 0.0 | 0.0 | Initially clear, cloudy after 7 minutes |
| **2A (10% replacement)** | 2.7 | 0.3 | 0.0 | Initially clear, cloudy after 17 minutes |
| **3A (15% replacement)** | 2.55 | 0.45 | 0.0 | Initially clear, cloudy after ~27 minutes |
| **4A (20% replacement)** | 2.4 | 0.6 | 0.0 | Initially clear, cloudy after ~30 minutes |
| **2M (10% replacement)** | 2.7 | 0.0 | 0.3 | Initially clear, remained clear for at least 30 minutes |
| **3M (15% replacement)** | 2.55 | 0.0 | 0.45 | Initially clear, remained clear for at least 30 minutes |
| **4M (20% replacement)** | 2.4 | 0.0 | 0.6 | Initially clear, remained clear for at least 30 minutes |

The control, RebM80, is amorphous and initially the super concentrate was clear after stirring, but turned cloudy quickly. Replacement of RebM80 with Reb A and Mogroside V improved solubility, i.e. duration of clarity after mixing.

Certain super concentrates were diluted to 0.3 wt% with water and stirred for the indicated time. Observations were noted as follows:

**Table 3: 0.3 wt% dilutions**

| **Sample** | **Stirring Time** | **Appearance** |
|---|---|---|
| **Control** | 2-5 hours | Cloudy |
| **2A (10% replacement)** | 2-5 hours | Less cloudy than control |
| **4A (20% replacement)** | 2-5 hours | Clear |
| **2A (10% replacement)** | 60 hours | Less cloudy than control |
| **4A (20% replacement)** | 60 hours | Clear |
| **Control** | 15 hours | Cloudy |
| **2M (10% replacement)** | 15 hours | Clear |
| **3M (15% replacement)** | 15 hours | Clear |
| **5M (30% replacement)** | 15 hours | Clear |
| **Control** | 40 hours | Cloudy |
| **2M (10% replacement)** | 40 hours | Clear |
| **3M (15% replacement)** | 40 hours | Clear |
| **5M (30% replacement)** | 40 hours | Clear |

### EXAMPLE 2: Replacement of RebM80 with Reb A (20-35 wt%) (not part of the invention)

0.333 wt% lemon-lime samples containing amorphous RebM80 and 20-35 wt% replacement with Reb A were prepared with water and stirred for 5 hours. The appearance of the sample was noted after 5 hours as follows:

**Table 4: Appearance of 0.333 wt% lemon-lime samples**

| **Sample** | **Steviol Glycoside Composition** | **Appearance** |
|---|---|---|
| **Control (100 % RebM80)** | 0.333 wt% RebM80 | Cloudy |
| **20% Reb A replacement** | 0.266 wt% RebM80 | Clear |
| | 0.067 wt% Reb A | |
| **25% Reb A replacement** | 0.25 wt% RebM80 | Clear |
| | 0.083 wt% Reb A | |
| **30% Reb A replacement** | 0.233 wt% RebM80 | Clear |
| | 0.1 wt% Reb A | |
| **35 % Reb A replacement** | 0.216 wt% RebM80 | Clear |
| | 0.117% Reb A | |

### EXAMPLE 3: Replacement of RebM80 with Reb A in 1 wt% concentrates (not part of the invention)

1 wt% concentrates in water were prepared with amorphous RebM80 and 10-25 wt% replacement with Reb A and stirred for 3-23 hours. The appearance of the samples was noted at several time points after stirring: 3 hours, 5 hours, 7 hours and 23 hours. The appearance of the samples was observed as follows:

**Table 5: Appearance of 1 wt% RebM80/Reb A samples**

| **Sample** | **Steviol Glycoside Composition** | **Appearance** |
|---|---|---|
| **Control (100% RebM80)** | 1.0 wt% RebM80 | Cloudy at all time points |
| **10% Reb A Replacement** | 0.9 wt% RebM80 | Less cloudy compared to control at 3-7 hours, totally cloudy by 23 hours |
| | 0.1 wt% Reb A | |
| **20% Reb A Replacement** | 0.8 wt% RebM80 | Less cloudy than 10% Reb A Replacement at all time points, but not clear at any time points |
| | 0.2 wt% Reb A | |
| **25% Reb A Replacement** | 0.75 wt% RebM80 | Less cloudy than 20% Reb A Replacement at all time points, but not clear at any time points |
| | 0.25 wt% Reb A | |
| **35% Reb A Replacement** | 0.65% wt% RebM80 | Clear at all time points |
| | 0.35 wt% Reb A | |

### EXAMPLE 4: Replacement of RebM80 with Alpha (RebA/RebB blend)

Lemon-lime beverages (all containing 0.338 wt% steviol glycoside concentration) were prepared by combining the ingredients listed below with citric buffer and stirred. The appearance of the beverages was observed at several time points.

**Table 6: Effect of addition of Alpha and RA 95 on lemon & Lime beverage of Reb M80 (amorphous) based formulation**

| **Formula** | **Reb M 80 (wt%)** | **Alpha (wt%)** | **Reb A (wt%)** | **S-8131** | **S-651** | **S-818** | **Comment** |
|---|---|---|---|---|---|---|---|
| **Control (100% RebM80)** | 0.338 | - | - | 0.16 | 1.13 | 0.38 | Cloudy at day 0 |
| **20% Replacement** | 0.27 | 0.034 | 0.034 | 0.16 | 1.13 | 0.38 | Clear after 7 days |
| **25% Replacement** | 0.254 | 0.042 | 0.042 | 0.16 | 1.13 | 0.38 | Clear after 7 days |
| **30% Replacement** | 0.236 | 0.051 | 0.051 | 0.16 | 1.13 | 0.38 | Clear after 23 days |
| **35% Replacement** | 0.22 | 0.059 | 0.059 | 0.16 | 1.13 | 0.38 | Clear after 23 days |

### EXAMPLE 5: Impact of Various Solubilizing Aids (not part of the invention)

Samples having the wt% indicated below were prepared. The appearance of the samples was noted as follows:

**Table 7: Summary of combination of different steviol glycosides and solubilization aids on the Reb M/Reb D solution stability in concentrated syrup**

| **Formula** | **Reb M 80** | **A95** | **Reb A** | **GSG** | **Allu 77%** | **EMIQ R-20** | **W8** | **Quillaja extract** | **5-813** | **5-651** | **5-818** | **Comment** |
|---|---|---|---|---|---|---|---|---|---|---|---|---|
| 1 | 0.5 | - | - | - | - | - | - | - | 0.06 | 0.4 | - | Precipitated in 1 day |
| 2 | 0.4 | - | - | - | - | - | - | - | 0.06 | 0.4 | - | Precipitated in 1 day |
| 3 | 0.385 | - | - | - | - | - | - | - | 0.16 | 0.4 | - | Precipitated in 1 day |
| 4 | 0.385 | - | - | - | 19.3 | - | - | - | 0.16 | 1.13 | 0.38 | Precipitated in 2 day |
| 5 | 0.35 | - | - | - | - | - | - | - | 0.06 | 0.4 | - | Precipitated in 3 days |
| 6 | 0.35 | - | - | - | - | - | - | 0.35 | 0.06 | 0.4 | - | Precipitated in 3 days |
| 7 | 0.308 | - | - | - | - | - | - | - | 0.16 | 1.13 | 0.38 | Precipitated in 3 days |
| 8 | 0.5 | - | - | - | - | 0.5 | - | - | 0.06 | 0.4 | - | Precipitated in 6 days |
| 9 | 0.5 | - | - | - | - | - | - | 0.5 | 0.06 | 0.4 | - | Precipitated in 2 days |
| 10 | 0.5 | - | - | - | - | - | 0.5 | - | 0.06 | 0.5 | - | Precipitated in 2 days |
| 11 | 0.5 | - | - | - | - | 0.5 | - | - | 0.06 | 0.5 | - | Precipitated in 4 days |
| 12 | 0.4 | - | - | - | - | 0.4 | - | - | 0.06 | 0.4 | - | Precipitated in 4 days |
| 13 | 0.4 | - | - | - | - | - | - | 0.4 | 0.06 | 0.4 | - | Precipitated in 1 day |
| 14 | 0.4 | - | - | - | - | - | 0.4 | - | 0.06 | 0.4 | - | Precipitated in 5 days |
| 15 | 0.4 | - | - | 0.1 | - | - | - | - | 0.06 | 0.5 | - | Precipitated in 4 days |
| 16 | 0.429 | - | 0.078 | - | - | - | - | - | 0.06 | 0.4 | - | Precipitated in 5 days |
| 17 | 0.362 | - | 0.0 4 | - | - | - | - | - | 0.06 | 0.4 | - | Slight Precip In 5 days |
| 18 | 0.347 | - | 0.038 | - | 19.3 | - | - | - | 0.16 | 1.13 | 0.38 | Precipitated in 2 days |
| 19 | 0.347 | - | 0.038 | - | - | 0.19 | - | - | 0.16 | 1.13 | 0.38 | Slight Precip In 10 days |
| 20 | 0.347 | - | 0.038 | - | - | 0.385 | | - | 0.16 | 1.13 | 0.38 | Slight Precip In 7 days |
| 21 | 0.34 | - | 0.0 6 | - | - | - | - | - | 0.06 | 0.4 | - | Slight Precip In 5 days |
| 22 | 0.327 | - | 0.058 | - | - | - | | - | 0.16 | 1.13 | 0.38 | Slight Precip In 10 days |
| 23 | 0.327 | - | 0.058 | - | - | 0.19 | | - | 0.16 | 1.13 | 0.38 | no precipitation for > 14 days |
| 24 | 0.32 | - | 0.0 4 | 0.04 | - | 0.4 | - | - | 0.16 | 1.13 | 0.38 | Slight Precip In 10 days |
| 25 | 0.32 | - | 0.0 4 | 0.04 | - | 0.4 | - | - | 0.16 | 1.13 | 0.38 | Solution heated, no precipitation for > **14** days |
| 26 | 0.32 | - | 0.0 8 | - | - | - | - | - | 0.16 | 1.13 | 0.38 | Slight Precip in 10 days |

| | **Reb M 80** | **A95** | **Reb A** | **GSG** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 27 | 0.32 | - | - | 0.08 | - | - | - | - | 0.06 | 0.4 | - | Slight Precip in 10 days |
| 28 | 0.32 | - | - | 0.08 | - | 0.4 | - | - | 0.06 | 0.4 | - | Solution heated, no precipitation for >**14** days |
| 29 | 0.32 | - | - | 0.08 | - | 0.4 | - | - | 0.06 | 0.4 | = | no precipitation for > **14** days |
| 30 | 0.308 | - | 0.077 | - | - | - | - | - | 0.16 | 1.13 | 0.38 | no precipitation for > **14** days |
| 31 | | 0.30 8 | 0.077 | - | - | - | - | - | 0.16 | 1.13 | 0.38 | no precipitation for > **14** days |
| 32 | 0.3 | - | 0.1 | - | - | - | - | - | 0.06 | 0.4 | - | no precipitation for > **14** days |
| 33 | 0.3 | - | - | 0.1 | - | - | - | - | 0.06 | 0.4 | - | no precipitation for > **14** days |
| 34 | 0.289 | - | 0.096 | - | - | - | - | - | 0.16 | 1.13 | 0.38 | no precipitation for > **14** days |
| 35 | - | 0.28 9 | 0.096 | - | - | - | - | - | 0.16 | 1.13 | 0.38 | no precipitation for > **14** days |
| 36 | 0.28 | - | - | - | - | - | - | - | 0.06 | 0.5 | - | no precipitation for > **14** days |
| 37 | 0.28 | - | 0.12 | - | - | - | - | - | 0.06 | 0.5 | - | no precipitation for > **14** days |
| 38 | 0.28 | - | - | 0.12 | - | - | - | - | 0.06 | 0.5 | - | no precipitation for > **14** days |
| 39 | 0.28 | - | 0.12 (alpha ) | - | - | - | - | - | 0.06 | 0.5 | - | Slight Precip in 4 days |
| 40 | 0.275 | - | 0.032 | - | - | - | - | -- | 0.16 | 1.13 | 0.38 | no precipitation for > **14** days |
| 41 | 0.275 | - | 0.032 | - | 19.3 | - | - | - | 0.16 | 1.13 | 0.38 | no precipitation for > **14** days |
| 42 | 0.25 | - | 0.15 | - | - | - | - | - | 0.06 | 0.4 | - | no precipitation for > **14** days |
| 43 | 0.25 | - | - | 0.15 | - | - | - | - | 0.06 | 0.4 | - | no precipitation for > **14** days |
| 44 | 0.25 | - | 0.075 | 0.075 | - | - | - | - | 0.06 | 0.4 | - | no precipitation for > **14** days |
| 45 | 0.237 | - | 0.101 | - | - | - | - | - | 0.16 | 1.13 | 0.38 | no precipitation for > **14** days |
| 46 | 0.237 | - | - | 0.101 | - | - | - | - | 0.16 | 1.13 | 0.38 | no precipitation for > **14** days |
| 47 | 0.237 | - | 0.101 (alpha ) | - | - | - | - | - | 0.16 | 1.13 | 0.38 | no precipitation for > **14** days |
| 48 | 0.212 | - | 0.126 | - | - | - | - | - | 0.16 | 1.13 | 0.38 | no precipitation for > **14** days |
| 49 | - | 0.38 5 | - | - | - | - | - | - | 0.16 | 1.13 | 0.38 | Slight Precip in 4 days |
| 50 | - | 0.34 7 | 0.038 4 | - | - | 0.19 | - | - | 0.16 | 1.13 | 0.38 | no precipitation for > **14** days |
| 51 | - | 0.34 7 | 0.038 4 | - | - | - | - | - | 0.16 | 1.13 | 0.38 | no precipitation for > **14** days |
| 52 | - | 0.34 7 | 0.038 4 | - | 19.3 | - | - | - | 0.16 | 1.13 | 0.38 | no precipitation for > **14** days |
| 53 | 0.195 | 0.19 5 | - | - | - | - | - | - | 0.16 | 1.13 | 0.38 | solution heated, no precipitation for >**14** days |
| 54 | 0.195 | 0.19 5 | - | - | - | - | - | - | 0.16 | 1.13 | 0.38 | Precipitated in 0 days |

| | **Reb M 80** | **A95** | **Reb A** | **Reb E** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 55 | 0.36 | - | - | 0.04 | - | - | - | - | 0.06 | 0.4 | - | Precipitated in 2 days |
| 56 | 0.35 | - | - | 0.05 | - | - | - | - | 0.06 | 0.4 | - | Precipitated in 2 days |
| 57 | 0.30 | - | - | 0.1 | - | - | - | - | 0.06 | 0.4 | - | Slight Precip In 7 days |
| 58 | 0.28 | - | - | 0.12 | - | - | - | - | 0.06 | 0.5 | - | Slight Precip in 4 days |

| | **Reb M 80** | **A95** | **Reb A** | **Mog V** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 59 | 0.27 | | 0.0 3 | | | | | | 0.16 | 1.13 | 0.38 | **Turbid** |
| 60 | 0.24 | | 0.0 6 | | | | | | 0.16 | 1.13 | 0.38 | **Turbid** |
| 61 | 0.225 | | 0.0 75 | | | | | | 0.16 | 1.13 | 0.38 | OK after 1 day |
| 62 | 0.21 | | 0.0 9 | | | | | | 0.16 | 1.13 | 0.38 | OK after 1 day |
| 63 | 0.27 | | | 0.03 | | | | | 0.16 | 1.13 | 0.38 | **Turbid** |
| 64 | 0.24 | | | 0.06 | | | | | 0.16 | 1.13 | 0.38 | **Turbid** |
| 65 | 0.225 | | | 0.075 | | | | | 0.16 | 1.13 | 0.38 | Slight Turbid |
| 66 | 0.21 | | | 0.09 | | | | | 0.16 | 1.13 | 0.38 | OK after 1 day |
| 67 | 0.21 | | 0.0 3 | 0.06 | | | | | 0.16 | 1.13 | 0.38 | OK after 1 day |

### EXAMPLE 6: Replacement of RebM80 with EMIQ blends (not part of the invention)

Lemon-lime samples having the indicated wt% were prepared by combining the ingredients listed below with citric buffer and stirring. The appearance after 1 day was observed as noted:

**Table 8: Lemon-lime samples containing RebM80 and EMIQ**

| Sample | Concentrations | Appearance |
|---|---|---|
| 1 (0.384 wt% SG concentration | 0.346 wt% RebM80 | Clear |
| | 0.038 wt% Reb A | |
| | 0.173 wt% EMIQ | |
| 2 (0.384 wt% SG concentration) | 0.326 wt% RebM80 | Clear |
| | 0.058 wt% Reb A | |
| | 0.173 wt% EMIQ | |
| 3 (0.4 wt% SG concentration) | 0.32 wt% RebM80 | Clear |
| | 0.4 wt% EMIQ | |
| | 0.04 wt% Reb A | |
| | 0.04 wt % GSG | |
| 4 (0.4 wt% SG concentration) | 0.32 wt% RebM80 | Clear |
| | 0.08 wt% GSG | |
| | 0.4 wt% EMIQ | |

### EXAMPLE 7: Replacement of Crystalline RebM80 with Reb A and Mog V (not part of the invention)

0.3 wt% samples were prepared with water and the ingredients indicated below. The samples were stirred for 20 hours. The appearance of the samples was noted after stirring ceased as follows:

**Table 10: Crystalline RebM80 and Reb A, Mog V or Reb A/Mog V Replacement**

| **Sample** | **Steviol Glycoside Concentration** | **Appearance** |
|---|---|---|
| **Control (100 wt% RebM80)** | 0.3 wt% RebM80 | Cloudy |
| **10% Replacement (Reb A)** | 0.27 wt% RebM80 | Less cloudy than control, but not |
| | 0.03 wt% Reb A | clear |
| **20% Replacement (Reb A)** | 0.24 wt% RebM80 | Less cloudy than 10% Replacement, but not clear |
| | 0.06 wt% Reb A | |
| **25% Replacement (Reb A)** | 0.225 wt% RebM80 | Clear |
| | 0.075 wt% Reb A | |
| **30% Replacement (Reb A)** | 0.21 wt% RebM80 | Clear |
| | 0.09 wt% Reb A | |
| **10% Replacement (Mog V)** | 0.27 wt% RebM80 | Less cloudy than control, but not clear |
| | 0.03 wt% Mog V | |
| **20% Replacement (Mog V)** | 0.24 wt% RebM80 | Less cloudy than 10% Replacement, but not clear |
| | 0.06 wt% Mog V | |
| **25% Replacement (Mog V)** | 0.225 wt% RebM80 | Less cloudy than 20% Replacement, but not clear |
| | 0.075 wt% Mog V | |
| **30% Replacement (Mog V)** | 0.21 wt% RebM80 | Clear |
| | 0.09 wt% Mog V | |
| **30% Replacement (Reb A and Mog V)** | 0.21 wt% RebM80 | Clear |
| | 0.06 wt% Mog V | |
| | 0.03 wt% Reb A | |

## Claims

1. A method for improving the aqueous solubility of a steviol glycoside blend comprising substituting from about 10 wt% to about 40 wt% of the steviol glycoside blend with a composition comprising reb A and a reb A/reb B blend, wherein the relative contributions of reb A and reb A/reb B in the composition can vary from about 10 wt% to about 90wt% reb A and from about 90 wt% to about 10 wt% reb A/reb B blend.

2. A method for improving the aqueous solubility of a steviol glycoside blend comprising substituting from about 25 wt% to about 45 wt% of the steviol glycoside blend with a composition comprising reb A that consists essentially of a reb A/reb B blend.

3. The method of claim 1, wherein the composition comprising reb A and a reb A/reb B blend further comprises glucosylated steviol glycosides.

4. The method of claim 1 or claim 2, wherein the steviol glycoside blend is in amorphous form, crystalline form or a combination of amorphous and crystalline forms.

5. The method of any one of claims 1-4, wherein the improved blend has an aqueous solubility that is at least about 2.5x greater than the aqueous solubility of the steviol glycoside blend when the improved blend and the steviol glycoside blend are measured at the same wt%.

6. A blend comprising: (i) from about 60 wt% to about 90 wt% of a steviol glycoside blend and (ii) from about 10 wt% to about 40 wt% of a composition comprising reb A and a reb A/reb B blend, wherein the relative contributions of reb A and reb A/reb B in the composition can vary from about 10 wt% to about 90wt% rebA and from about 90 wt% to about 10 wt% reb A/reb B blend, wherein the blend has an aqueous solubility of at least about 0.25 wt%.

7. A blend comprising (i) from about 55 wt% to about 75 wt% of a steviol glycoside blend and (ii) from about 25 wt % to about 45 wt % of a composition comprising reb A that consists essentially of a reb A/reb B blend.

8. The blend of claim 6 or claim 7, wherein the steviol glycoside blend is in amorphous form, crystalline form or a combination of amorphous and crystalline forms.

9. The blend of claim 6 or claim 7, wherein the composition comprising reb A and a reb A/reb B blend further comprises glucosylated steviol glycosides.

10. The blend of any one of claims 6-9, wherein the aqueous solubility of the blend is at least about 2.5x greater than the aqueous solubility of the steviol glycoside blend alone, when the blend and the steviol glycoside blend are measured at the same wt%.

11. A concentrate comprising the blend of any one of claims 6-10 in a concentration of about 0.25 wt% to about 3 wt%, wherein the concentrate is clear by visual inspection, optionally wherein the concentrate remains clear by visual inspection for at least one week.

12. A beverage comprising a concentrate of claim 11.

13. The beverage of claim 11, further comprising one or more additional sweeteners, functional ingredients, additives and combinations thereof.

14. The beverage of claim 11 or claim 12, wherein the beverage is selected from the group consisting of a zero-calorie beverage, a low-calorie beverage and a mid-calorie beverage; and/or wherein the beverage is selected from the group consisting of frozen carbonated beverages, enhanced sparkling beverages, cola, fruit-flavored sparkling beverages, ginger-ale, soft drinks and root beer.

15. The beverage of claim 11, further comprising at least one additive selected from the group consisting of caramel, caffeine, phosphoric acid and citric acid.

## Patentansprüche

1. Verfahren zur Verbesserung der Wasserlöslichkeit einer Steviolglykosidmischung, umfassend Ersetzen von etwa 10 Gew.-% bis etwa 40 Gew.-% der Steviolglykosidmischung durch eine Zusammensetzung, die Reb A und eine Reb A/Reb B-Mischung umfasst, wobei die relativen Beiträge von Reb A und Reb A/Reb B in der Zusammensetzung von etwa 10 Gew.-% bis etwa 90 Gew.-% Reb A bzw. von etwa 90 Gew.-% bis etwa 10 Gew.-% Reb A/Reb B-Mischung variieren können.

2. Verfahren zur Verbesserung der Wasserlöslichkeit einer Steviolglykosidmischung, umfassend Ersetzen von etwa 25 Gew.-% bis etwa 45 Gew.-% der Steviolglykosidmischung durch eine Reb A umfassende Zusammensetzung, die im Wesentlichen aus einer Reb A/Reb B-Mischung besteht.

3. Verfahren nach Anspruch 1, wobei die Reb A und eine Reb A/Reb B-Mischung umfassende Zusammensetzung ferner glucosylierte Steviolglykoside umfasst.

4. Verfahren nach Anspruch 1 oder Anspruch 2, wobei die Steviolglykosidmischung in amorpher Form, kristalliner Form oder einer Kombination von amorpher und kristalliner Form vorliegt.

5. Verfahren nach einem der Ansprüche 1-4, wobei die verbesserte Mischung eine Wasserlöslichkeit aufweist, die mindestens etwa 2,5x größer als die Wasserlöslichkeit der Steviolglykosidmischung ist, wenn die verbesserte Mischung und die Steviolglykosidmischung bei gleichen Gew.-% gemessen werden.

6. Mischung, umfassend (i) etwa 60 Gew.-% bis etwa 90 Gew.-% einer Steviolglykosidmischung und (ii) etwa 10 Gew.-% bis etwa 40 Gew.-% einer Zusammensetzung, die Reb A und eine Reb A/Reb B-Mischung umfasst, wobei die relativen Beiträge von Reb A und Reb A/Reb B in der Zusammensetzung von etwa 10 Gew.-% bis etwa 90 Gew.-% Reb A bzw. von etwa 90 Gew.-% bis etwa 10 Gew.-% Reb A/Reb B-Mischung variieren können, wobei die Mischung eine Wasserlöslichkeit von mindestens etwa 0,25 Gew.-% aufweist.

7. Mischung, umfassend (i) etwa 55 Gew.-% bis etwa 75 Gew.-% einer Steviolglykosidmischung und (ii) etwa 25 Gew.-% bis etwa 45 Gew.-% einer Reb A umfassenden Zusammensetzung, die im Wesentlichen aus einer Reb A/Reb B-Mischung besteht.

8. Mischung nach Anspruch 6 oder Anspruch 7, wobei die Steviolglykosidmischung in amorpher Form, kristalliner Form oder einer Kombination von amorpher und kristalliner Form vorliegt.

9. Mischung nach Anspruch 6 oder Anspruch 7, wobei die Reb A und eine Reb A/Reb B-Mischung umfassende Zusammensetzung ferner glucosylierte Steviolglykoside umfasst.

10. Mischung nach einem der Ansprüche 6-9, wobei die Wasserlöslichkeit der Mischung mindestens etwa 2,5x größer als die Wasserlöslichkeit der Steviolglykosidmischung allein ist, wenn die Mischung und die Steviolglykosidmischung bei gleichen Gew.-% gemessen werden.

11. Konzentrat, umfassend die Mischung nach einem der Ansprüche 6-10 in einer Konzentration von etwa 0,25 Gew.-% bis etwa 3 Gew.-%, wobei das Konzentrat gemäß Sichtprüfung klar ist, gegebenenfalls wobei das Konzentrat gemäß Sichtprüfung mindestens eine Woche klar bleibt.

12. Getränk, umfassend ein Konzentrat nach Anspruch 11.

13. Getränk nach Anspruch 11, ferner umfassend einen oder mehrere zusätzliche Süßstoffe, funktionelle Inhaltsstoffe, Zusatzstoffe und Kombinationen davon.

14. Getränk nach Anspruch 11 oder Anspruch 12, wobei das Getränk aus der Gruppe bestehend aus einem kalorienfreien Getränk, einem kalorienarmen Getränk und einem Getränk mit mittlerem Kaloriengehalt ausgewählt ist; und/oder wobei das Getränk aus der Gruppe bestehend aus gefrorenen kohlensäurehaltigen Getränken, verbesserten Sprudelgetränken, Cola, Sprudelgetränken mit Fruchtgeschmack, Ginger Ale, Erfrischungsgetränken und Root Beer ausgewählt ist.

15. Getränk nach Anspruch 11, ferner umfassend mindestens einen Zusatzstoff, der aus der Gruppe bestehend aus Karamell, Coffein, Phosphorsäure und Zitronensäure ausgewählt ist.

## Revendications

1. Procédé pour améliorer la solubilité aqueuse d'un mélange de glycosides de stéviol comprenant la substitution d'environ 10 % en poids à environ 40 % en poids du mélange de glycosides de stéviol par une composition comprenant reb A et un mélange reb A/reb B, dans lequel les contributions relatives de reb A et reb A/reb B dans la composition peuvent varier d'environ 10 % en poids à environ 90 % en poids de reb A et d'environ 90 % en poids à environ 10 % en poids du mélange reb A/reb B.

2. Procédé pour améliorer la solubilité aqueuse d'un mélange de glycosides de stéviol comprenant la substitution d'environ 25 % en poids à environ 45 % en poids du mélange de glycosides de stéviol par une composition comprenant reb A qui est essentiellement constituée d'un mélange reb A/reb B.

3. Procédé selon la revendication 1, dans lequel la composition comprenant reb A et un mélange reb A/reb B comprend en outre des glycosides de stéviol glucosylés.

4. Procédé selon la revendication 1 ou la revendication 2, dans lequel le mélange de glycosides de stéviol est sous forme amorphe, sous forme cristalline ou une combinaison de formes amorphe et cristalline.

5. Procédé selon l'une quelconque des revendications 1 à 4, dans lequel le mélange amélioré a une solubilité aqueuse qui est au moins environ 2,5 fois supérieure à la solubilité aqueuse du mélange de glycosides de stéviol lorsque le mélange amélioré et le mélange de glycosides de stéviol sont mesurés au même % en poids.

6. Mélange comprenant : (i) d'environ 60 % en poids à environ 90 % en poids d'un mélange de glycosides de stéviol et (ii) d'environ 10 % en poids à environ 40 % en poids d'une composition comprenant reb A et un mélange reb A/reb B, les contributions relatives de reb A et reb A/reb B dans la composition pouvant varier d'environ 10 % en poids à environ 90 % en poids de reb A et d'environ 90 % en poids à environ 10 % en poids d'un mélange reb A/reb B, le mélange ayant une solubilité aqueuse d'au moins environ 0,25 % en poids.

7. Mélange comprenant (i) d'environ 55 % en poids à environ 75 % en poids d'un mélange de glycosides de stéviol et (ii) d'environ 25 % en poids à environ 45 % en poids d'une composition comprenant reb A qui est essentiellement constituée d'un mélange reb A/reb B.

8. Mélange selon la revendication 6 ou la revendication 7, dans lequel le mélange de glycosides de stéviol est sous forme amorphe, sous forme cristalline ou une combinaison de formes amorphe et cristalline.

9. Mélange selon la revendication 6 ou la revendication 7, dans lequel la composition comprenant reb A et un mélange reb A/reb B comprend en outre des glycosides de stéviol glucosylés.

10. Mélange selon l'une quelconque des revendications 6 à 9, dans lequel la solubilité aqueuse du mélange est au moins environ 2,5 fois supérieure à la solubilité aqueuse du mélange de glycosides de stéviol seul, lorsque le mélange et le mélange de glycosides de stéviol sont mesurés au même % en poids.

11. Concentré comprenant le mélange selon l'une quelconque des revendications 6 à 10 en une concentration d'environ 0,25 % en poids à environ 3 % en poids, dans lequel le concentré est limpide par inspection visuelle, éventuellement dans lequel le concentré reste limpide par inspection visuelle pendant au moins une semaine.

12. Boisson comprenant un concentré selon la revendication 11.

13. Boisson selon la revendication 11, comprenant en outre un ou plusieurs édulcorants, ingrédients fonctionnels, additifs supplémentaires et des combinaisons de ceux-ci.

14. Boisson selon la revendication 11 ou la revendication 12, dans laquelle la boisson est choisie dans le groupe constitué par une boisson sans calories, une boisson à faible teneur en calories et une boisson à teneur moyenne en calories ; et/ou dans laquelle la boisson est choisie dans le groupe constitué par des boissons gazeuses glacées, des boissons pétillantes enrichies, un cola, des boissons pétillantes aromatisées aux fruits, une ginger ale, des boissons gazeuses et une root beer.

15. Boisson selon la revendication 11, comprenant en outre au moins un additif choisi dans le groupe constitué par le caramel, la caféine, l'acide phosphorique et l'acide citrique.
